# EUROPÄISCHE PATENTSCHRIFT

(11) **EP 4 688 693 B1**
(45) Veröffentlichungstag und Bekanntmachung des Hinweises auf die Patenterteilung: **02.09.2026**
(21) Anmeldenummer: 24745640.3
(22) Anmeldetag: 04.07.2024
(51) Int. Cl.: C04B 18/167, E02D 5/34, B28C 9/04, G06Q 50/08, B28C 7/02

(54) **SPEZIALTIEFBAU-BETONIERTECHNIK FÜR BAUVORHABEN IN BALLUNGSRÄUMEN**
SPECIAL CIVIL ENGINEERING CONCRETING TECHNIQUE FOR CONSTRUCTION PROJECTS IN METROPOLITAN AREAS
TECHNIQUE DE BÉTONNAGE UTILISÉE POUR DES OUVRAGES DE GÉNIE CIVIL SPÉCIFIQUES POUR DES PROJETS DE CONSTRUCTION DANS LES ZONES URBAINES

(30) Priorität: 10.07.2023 DE 102023118181
(43) Veröffentlichungstag der Anmeldung: 11.02.2026
(73) Patentinhaber: PST SPEZIALTIEFBAU SÜD GMBH, 86167 Augsburg (DE)
(72) Erfinder: APPEL, Michael, 86167 Augsburg (DE)
(74) Vertreter: ERNICKE Patent- und Rechtsanwälte PartmbB
(86) Internationale Anmeldenummer: PCT/EP2024/068824
(87) Internationale Veröffentlichungsnummer: WO 2025/012065

(56) Entgegenhaltungen:
- EP-A1- 4 116 274
- WO-A1-2024/068336
- WO-A2-2018/011435
- CN-A- 115 897 593
- CN-U- 216 108 661
- DE-A1- 102012 109 332
- DE-A1- 102020 115 873
- DE-A1- 102021 006 575
- DE-B3- 102018 120 331
- GB-A- 2 419 099

## Beschreibung

Die Erfindung liegt auf dem Gebiet des Spezialtiefbaus und kann insbesondere bei Bauvorhaben in Ballungsräumen Anwendung finden.

JP-A-2001/200537 offenbart ein Verfahren zur Herstellung von säulenförmigen Körpern im Untergrund, bei dem grobe Brocken aus Abbruchmaterial in eine Bodenöffnung eingebracht werden. Anschließend werden Hohlräume zwischen den Brocken mit einem zementhaltigen Gemisch verfüllt, das als slurry (Schlamm) bezeichnet wird. Ein ähnliches Verfahren geht aus JP-A-2017/206424 hervor.

Beton ist ein häufig verwendeter Baustoff, der mit zahlreichen Anforderungsklassen in verschiedensten Ausführungen und Zusammensetzungen definiert ist und entsprechend sehr unterschiedliche Eigenschaften haben kann. Er besteht grundsätzlich aus den Hauptbestandteilen Zuschlagstoffe, Bindemittel und Wasser. Die Zuschlagstoffe von Beton umfassen einen erheblichen Anteil an grobkörnigen Materialien, insbesondere mit einem Korndurchmesser größer 16 Millimeter.

Der Begriff "Zuschlagstoffe" ist im Bereich der Betonherstellung ein Fachbegriff und es gibt verschiedene Normen, die Zuschlagstoffe für bestimmte Betonklassen definieren, meist in Form von Natur-Zuschlagstoffen mit bestimmten Körnungen, den sog. Fraktionen. Als Natur-Zuschlagstoffe werden Naturstoffkörnungen, üblicherweise Natur-Sand und Natur-Kies in Kombination verwendet. Als Bindemittel wird hauptsächlich Zement verwendet, der in unterschiedlichen Qualitätsklassen verfügbar ist. Weiterhin kann ein Bindemittel Zusatzstoffe beinhalten, die bestimmte Eigenschaften des Betons begünstigen sollen. Zu diesen Zusatzstoffen zählen aktive, also chemisch wirkende Zusatzstoffe, bspw. Verzögerungsmittel zur Verzögerung des Abbindevorgangs, sowie passive, also nicht-chemisch wirkende Zusatzstoffe, bspw. Gesteinsmehle zur Beeinflussung des Fließverhaltens.

Nach DIN 1045-2 ist ein Ersatz von Natur-Zuschlagstoffen durch sogenannte recyclierte Gesteinskörnungen nur bis zu einem Anteil von 45% gestattet. Die recyclierten Gesteinskörnungen können neben Altbeton-Anteilen auch Naturstein umfassen. Ferner sind bis zu 30% Kalksandstein oder andere Natur-Materialien möglich. Die Hersteller von Bauwerken müssen die Zusammensetzung des verwendeten Betons dokumentieren und nachweisen. Wenn die Zusammensetzung von den Vorgaben gemäß den geltenden Normen abweicht, muss eine Sonderzulassung eingeholt werden, die als "Zustimmung im Einzelfall" bezeichnet wird.

Aus der DE 10 2018 120 331 B3 ist bekannt, dass Beton-Recyclat, das durch ein bestimmtes Herstellungsverfahren in einer Hochdruckrollenpresse gebrochen wird, als ein Zugschlagstoff für die Betonherstellung nutzbar ist, wobei das Beton-Recyclat weiterhin mit Druckbeanspruchung durch einmalige Pressung zwischen zwei Flächen mit einem bestimmten Druck gebrochen und agglomeriert wird sowie nachfolgend die Agglomerate durch weitere mechanische Beanspruchung zerstört werden.

Die DE 10 2021 114 940 A1 nimmt auf die vorgenannte DE 10 2018 120 331 B3 Bezug und betrifft den Anwendungsbereich von Stahlbetoninnenwänden des üblichen Hochbaus. Sie lehrt, dass ein Innenwandelement eines Büromoduls in einer stationären Anlage zur Herstellung von Fertig-Betonteilen unter Einhaltung bestimmter Normvorschriften herstellbar war, indem die normgemäß geforderte Gesteinskörnung nahezu vollständig durch Bauwerksbruch substituiert wurde. Der Bauwerksbruch wurde zuvor im Betonwerk mehrfach sortiert und gereinigt. Derartige Fertig-Betonteile werden im vollständig ausgehärteten Zustand zu einem Bauvorhaben transportiert und im Hochbau verarbeitet.

Für die meisten Bauvorhaben im Tiefbau wird der vor Ort zu verarbeitende Beton in einem Betonwerk hergestellt und mittels Transportfahrzeugen zu einer Baustelle gebracht. Ein solcher Beton wird nachfolgend als "Transportbeton" bezeichnet. Es handelt sich um einen verarbeitbaren aber an entfernter Stelle hergestellten Beton. Dabei ist zu berücksichtigen, dass der Begriff "Transportbeton" aus der Perspektive der vorgesehenen Verwendung am Ort des Bauvorhabens definiert ist und somit bedeutet, dass der zu verarbeitende Beton zuvor über größere Strecken antransportiert werden muss. Die Herstellung von Transportbeton erfolgt in der Praxis auf Basis eines geschätzten Mengenbedarfs für eine zukünftige Verarbeitungsphase, die in der Regel mehrere Stunden bis Tage in der Zukunft liegt. Bei Bauvorhaben in Ballungsräumen ist es üblich, die Bestellung von Beton mit mindestens 24-48 Stunden Zeitvorlauf auszuführen. Denn zwischen der Bestellung und der Verarbeitung muss der Beton hergestellt und transportiert sowie an der Baustelle zugeteilt und verarbeitet werden.

Die übliche Fördermenge eines Beton-Transportfahrzeugs beträgt 4-8 Kubikmeter. Bei Spezialfahrzeugen können bis zu 15 Kubikmeter erreicht werden. Diese Spezialfahrzeuge haben jedoch eine geringe Manövrierfähigkeit und sind für den Einsatz in Ballungsräumen häufig nicht geeignet. Da der Transportvorgang je nach Verkehrslage erheblichen Verzögerungen unterliegen kann, werden für Bauvorhaben in Ballungsräumen grundsätzlich größere Mengen von aktiven Zusatzstoffen zur Verzögerung des Abbindevorgangs eingesetzt.

Die im Beton enthaltenden Zuschlagstoffe bleiben - bei Verwendung von Natur-Zuschlagstoffen - unverändert und spielen bei der chemischen Reaktion der Abbindung keine Rolle. Aber das sie umschließende Gemisch aus Bindemittel und Wasser - der so genannte Zementleim - verändert seine Konsistenz und wird zu festem Zementstein. Wenn das Bindemittel, insbesondere der Zement, mit Wasser in Berührung kommt, kommt es praktisch augenblicklich zur so genannten Hydrolyse. Dabei reagiert das Wasser mit der Oberfläche der Zementklinker, was zu einem ersten Ansteifen des Zementleims führt. Danach gerät die spontane Reaktion zunächst ins Stocken. Erst einige Zeit nach dem Hinzufügen des Wassers brechen die Klinkeroberflächen auf und es beginnt der eigentliche Erstarrungsprozess des Zementleims. Bei der Hydratation werden die mit Wasser gefüllten Zwischenräume zwischen den Zement-Feststoffpartikeln nach und nach durch Hydratverbindungen ersetzt. Dabei handelt es sich um kristalline Feststoffe, in denen Wasser chemisch gebunden ist. Je nach verwendetem Zementtyp bilden sich bereits bei der normalen Herstellung von Beton unter ausschließlicher Verwendung von Natur-Zuschlagstoffen unterschiedliche Hydratkristalle und deren Form und Verschränkung ändert sich in Abhängigkeit von der Art und Menge der beigefügten aktiven Zusatzstoffe.

Durch die verzögerte Abbindung erfolgt also eine veränderte Kristallbildung, die sich im ausgehärteten Beton von der normalen verzögerungsfreien Abbindung unterscheiden lässt und zu abweichenden Materialeigenschaftswerten und insbesondere Belastbarkeitsparametern führt. Falls die Verkehrslage eine rechtzeitige Lieferung von Transportbeton nicht zulässt, kann eine gesamte Liefereinheit an Transportbeton unbrauchbar werden. Das gilt selbst dann, wenn der Beton prinzipiell noch ausreichend fließfähig wäre für eine mechanische Verarbeitung. Denn auch bei einem äußerlich noch verarbeitbaren Beton kann bereits eine Kristallisation eingesetzt haben, die bei erst nachfolgender Endverarbeitung zu einer unzureichenden Belastbarkeit führen könnte, sodass die Einhaltung bestimmter vorgegebener Soll-Belastbarkeitsparameter nicht mehr sichergestellt werden kann. Bei der Verwendung von Recycling-Zuschlagstoffen können zusätzliche Einflüsse auf die Kristallisation entstehen, auf die weiter unten noch im Detail eingegangen wird. Insbesondere spielt es für die Abbindung des Betons eine wichtige Rolle, dass während der Hydratation die geeigneten Mengen an Wasser zur Verfügung stehen, um die Hydrolyse vollständige stattfinden zu lassen. Trocknungs- und Saugverhalten der Betonmischen können - gerade bei der Verwendung von Recycling-Zuschlagstoffen - die Verfügbarkeit des Wasseranteils beeinflussen. Das gilt umso mehr, je länger ein Zeitverzug zwischen der Herstellung des Betons und der Verarbeitung ausfällt.

In der Praxis ist es bekannt, für den Hochbau, insbesondere für die Bildung von Wänden oder Decken eines Gebäudes, einen Teil-Recyclingbeton als Transportbeton zu verwenden, der anteilig Recycling-Zuschlagstoffe enthält. Hierdurch konnte bereits der Bedarf an Natur-Zuschlagstoffen, insbesondere der Bedarf an Natur-Sand und Natur-Kies reduziert werden. Allerdings hat es sich gezeigt, dass Teil-Recyclingbeton eine weniger gut vorhersagbare Abbindezeit aufweist als normaler Beton mit ausschließlicher Verwendung von Natur-Zuschlagstoffen, sodass für Teil-Recyclingbeton größere Mengen an aktiven Zusatzstoffen verwendet werden.

Durch die Verwendung von Teil-Recyclingbeton im Hochbau konnten bisher nur geringe CO₂-Einsparungen erzielt werden. Der Teil-Recyclingbeton wird als Transportbeton hergestellt und durch Transportfahrzeuge zu einer Baustelle gebracht, wo er verarbeitet wird.

Die Recycling-Zuschlagstoffe werden in Recycling-Unternehmen durch Sortieren, Säubern und Zerkleinern hergestellt und anschließend etwaig getrocknet und gelagert. Die Recycling-Unternehmen kaufen in der Regel Abbruchmaterial von Deponien oder von anderen Firmen an, die einen Bauwerk-Abriss durchführen. Das Abbruchmaterial wird ebenfalls mehrfach durch Transportfahrzeuge bewegt. Folglich wird für den Transport und die Verarbeitung des Abbruchmaterials ein hohes Maß an CO₂-Emissionen erzeugt. In der DE 10 2020 115 873 A1 ist vorgeschlagen worden, ein Beton-Abbruchmaterial noch am Ort des Abbruchs zu sortieren, selektiv den AltBeton weiter in der Brechanlage aufzubrechen und in verschiedene Bruchanteile zu unterteilen. Bestimmte Bruchanteile sollen anschließend wieder in ein entferntes Betonwerk geliefert und dort zu 100% für die Produktion von neuem Beton eingesetzt werden. Dieser neue Beton wird aus der Perspektive des Betonwerkes zwar als Frischbeton bezeichnet. Aus der Perspektive der Verwendung für ein neues Bauvorhaben handelt es sich allerdings um Transportbeton, weil er erneut mit einem Betonmischfahrzeug vom Betonwerk zum Bauvorhaben transportiert wird. Die vollständige Weiterverwendbarkeit bestimmter Bruchanteile führt dazu, dass für diese Bruchanteile keine weitere Aussortierung und keine Entsorgung stattfinden muss. CO₂-Emissionen werden bei der DE 10 2020 115 873 A1 dadurch eingespart, dass keine Zwischenlieferung des Abbruch-Materials an eine Deponie zur dortigen Sortierung erfolgt. Der Hauptteil der CO₂-Emissionen entsteht allerdings weiter durch den Transport der Abbruchmaterialen sowie des neu hergestellten Betons und ferner im Bereich der Herstellung des Bindemittels, insbesondere bei der Herstellung von Zement, weiter insbesondere in der Kalk-zu-Klinker Brennung. Je höher die geforderte Qualität des Bindemittels (Zement) ist, desto mehr Energie muss in den Brennvorgang investiert werden. Das gilt insbesondere für die höchste Qualitätsklasse CEM-I. Für viele Anwendungen im Hochbau ist es möglich, einen rein aus Natur-Zuschlagstoffen erzeugten Beton mit Zement einer niedrigen Qualitätsklasse, bspw. CEM-III, zu verwenden.

Natur-Zuschlagstoffe haben bei den bisher vorgeschlagenen Herstellungsarten in der Regel hinsichtlich der CO₂-Emission einen Vorteil, weil sie meist auf kurzen Wegen von einer Grube bzw. dem Abbauort zum Betonwerk transportiert werden können. Die Verarbeitung von Natur-Zuschlagstoffen ist sehr gut erforscht und es können wegen der guten Vorhersagbarkeit der erzielbaren Eigenschaften niedrigere Qualitätsklassen von Zement verarbeitet werden. Bei der Herstellung von Beton unter anteiliger Verwendung von Recycling-Zuschlagstoffen ist die Vorhersagbarkeit der Eigenschaften geringer.

Demzufolge stehen die bisherigen Ansätze zur Verwendung von RecyclingBeton unter dem negativen Vorbehalt, dass sie zu überhöhten CO₂-Emissionen führen, was einerseits aus dem transportbedingten Anteil folgt und andererseits aus dem Bestreben der Betonwerke, aus Sicherheitsgründen eine höhere Qualitätsklasse des Bindemittels zu wählen, wenn anteilig Recycling-Zuschlagstoffe verwendet werden.

In DE 10 2021 006 575 A1 wird die Herstellung eines ultra-hochfesten Fertigbetons vorgeschlagen sowie eine zugehörige Anlage, die in mehreren Containern unterbringbar und transportierbar ist. Die Anlage verarbeitet einerseits Zuschlagstoffe, die in einem Behälter gespeichert sind und andererseits Rohstoffe, die in einem anderen Behälter gespeichert sind. Als Zuschlagstoffe sollen vor allem aufbereitete Stoffe verstanden werden, beispielsweise klassische Gesteinskörnungen, welche der Dosieranlage zugeführt werden. Andererseits sollen auch gemahlene Rohstoffe als Zuschlagstoffe verarbeitbar sein. Eine Mühle zerkleinert die Rohstoffe. In einem Mischer werden die Rohstoffe unter Beigabe von Zuschlagstoffen vermengt.

Im Bereich des Tiefbaus gelten zumeist andere Anforderungen an den herzustellenden Beton als im Hochbau. Beispielsweise müssen Tiefbau-Betonwände oder Tiefbau-Betonpfähle häufig eine sehr hohe von der Seite her wirkende Kraft abstützen, weil sie über einen erheblichen Teil der Wandoder Pfahlhöhe einseitig das umliegende Erdreich abstützen. Ferner stehen Tiefbaubetonkörper häufig in ständigem, teilweise nur einseitigen Kontakt mit dem feuchten oder sogar nassen Erdreich. Und schließlich kann auf Tiefbau-Betonkörpern eine im Vergleich zum Hochbau deutlich größere Last aufliegen, da Tiefbau-Betonkörper häufig das Gesamtgewicht der darüber liegenden Baukonstruktion abstützen. Andererseits bestehen bei Tiefbau-Betonkörpern häufig geringere Anforderungen an die Oberflächenglätte oder die ästhetischen Beschaffenheiten wie Farbgebung oder Homogenität.

Eine der bevorzugten Herstellungstechniken für Tiefbau-Betonkörper ist das Herstellen von Bohrpfählen aus Beton, das beispielsweise in DE 696 06 647 T2 und 20 2012 109 332 A1 erläutert wird.

In der DE 195 47 589 A1 ist die Herstellung von Tiefbau-Pfählen aus Mörtel vorgeschlagen, wobei zur Streckung des Materials anstehender Boden, d.h. Erdreich beigegeben wird. Für die Herstellung von Mörtel dürfen gemäß Normung ausschließlich Feingranulate bis zu einem Durchmesser von 4mm beigegeben werden. Es sind also keine (groben) Gesteinskörnungen und keine Korngemische zulässig. Das Erdreich beinhaltet in der Regel einen weit überwiegenden Anteil an Natur-Materialien, nämlich Sand und Gestein, bspw. Kies. Die im Erdreich vorliegende Mischung dieser Natur-Zuschlagstoffe ist unbekannt und unterliegt hohen Inhomogenitäten. Das anstehende Erdreich ist weiterhin feucht und enthält somit eine unbekannte Menge an Wasser, was die Einstellung eines reproduzierbaren Verhältnisses zwischen Bindemitteln und Wasser schwierig bis unmöglich macht. Das Erdreich enthält zumeist größere Mengen an Erde und/oder Lehm, die einen unkontrollierbaren Einfluss auf die Festigkeit eines Tiefbau-Pfahls haben können und eine homogene Ausbildung eines starren Körpers als Endprodukt erschweren oder unmöglich machen. Ein Mörtelpfahl weist somit keine vorhersagbare Zusammensetzung auf und ist für die Herstellung von Tiefbau-Betonkörpern in der Regel nicht geeignet oder nicht zulässig.

In JP 2001-200 537 A wird vorgeschlagen, ein pfahlartiges Gebilde im Untergrund herzustellen, indem zunächst ein Loch in das Erdreich gebohrt wird, das in etwa die Außenform eines Pfahls vorgibt. Anschließend werden gröbere Brocken in das Loch geschüttet, zwischen denen Hohlräume verbleiben. Die Brocken können aus Betonabfall bestehen. Im letzten Schritt wird ein schlammartiges Gemisch "slurry" in die Brockenschüttung injiziert, wobei das Gemisch die Hohlräume möglichst ausfüllen soll. Das schlammartige Gemisch umfasst Wasser, Agglomerationsmittel und Erdreich (Natur-Stoffe) sowie anteilig gemahlenen Beton.

Es ist Aufgabe der vorliegenden Erfindung, eine verbesserte Betoniertechnik aufzuzeigen, die einen besseren Beitrag zur Schonung von natürlichen Ressourcen und/oder zur Einsparung von CO₂ schafft und/oder auf verbesserte Weise zur Herstellung von Tiefbau-Betonkörpern beiträgt.

Die Erfindung löst diese Aufgabe durch die Merkmale des Anspruchs 1.

Die Betoniertechnik gemäß der vorliegenden Offenbarung umfasst mehrere Aspekte, die für sich allein oder in beliebiger Kombination einen Beitrag zur Lösung der Aufgabe leisten. Diese Aspekte umfassen zumindest einen Tiefbau-Betonkörper, ein Betonierverfahren zur Herstellung eines Betonkörpers, ein Betonherstellungsverfahren, eine Beton-Rezepturdatenbank, eine Betoniervorrichtung sowie eine Beton-Anmischvorrichtung.

Die Gegenstände dieser Aspekte wirken bevorzugt zusammen, um eine Direktverwendung von Bauwerk-Abbruchmaterial zunächst im Spezial-Tiefbau und später in anderen Anwendungsbereichen zu erzielen, die einen erheblichen Beitrag zur Senkung von CO₂-Emissionen sowie zur Schonung natürlicher Ressourcen leistet. Ferner werden eine effiziente Raumnutzung auf einem Baugelände und eine Verminderung des Ausschusses an hergestelltem Beton erzielt. Die Betoniertechnik gemäß der vorliegenden Offenbarung fördert weiterhin die strukturierte und schnelle Schaffung von neuen Erkenntnissen über die Verwendbarkeit von Recycling-Zuschlagstoffen und deren direkte Anwendung in laufenden und zukünftigen Bauprojekten. Ausgangspunkt ist jeweils der zielgerichtete Einsatz von Bauwerk-Abbruchmaterial im (Spezial-)Tiefbau, insbesondere unter einer zeitlichen Überlappung der Phase des Gebäude-Abbruchs mit der Phase der Herstellung von Tiefbau-Betonkörpern, insbesondere zur Vorbereitung und/oder Einrichtung oder einer Baugrube.

Ein wesentlicher Grund, der dem Einsatz von Recyclingmaterial in der Herstellung von neuem Beton entgegensteht, liegt in parasitären Nebeneffekten, die sich aus dem Recyclingmaterial ergeben können, und insbesondere während der Hydratation zeigen, wie bspw. eine besondere Trocknungsneigung, eine besondere Porosität oder eine besondere Saugneigung. Derartige Parameter lassen sich zwar für ein spezifisches Abbruchmaterial bestimmen, wenn dieses eine gute Homogenität aufweist und insbesondere von einem bestimmten Bestandsbauwerk stammt, weil dort in der Regel dieselben Materialien im gesamten Baukörper verwendet werden. Jedoch können zwei dem Typ nach übereinstimmende Abbruchmaterialien von zwei unterschiedlichen Bestandsbauwerken große Parameterunterschiede aufweisen.

Solche Nebeneffekte können von einer besonders niedrigen Beherrschbarkeit gekennzeichnet sein, wenn der Beton in den ersten Stunden bis Tagen nach der Verarbeitung äußeren Umwelteinflüssen ungeschützt ausgesetzt ist. Dies gilt umso mehr, wenn der Abbindevorgang durch Verzögerungsmittel auf einen langen Zeitraum ausgedehnt werden. Denn bspw. der Einfluss von Wind, Sonneneinstrahlung sowie ein inneres Saugverhalten der eingesetzten Materialien können dazu führen, dass für den Abbindevorgang keine ausreichende Menge an Wasser zur Verfügung steht oder dass sich diese Menge während des Abbindevorgangs in unzulässiger Weise reduziert.

Bei einer Neubebauung eines Grundstücks kommt es zu einer Phasenfolge der notwendigen Tätigkeiten, die wie folgt gegliedert ist:
- Entkernung der Bestandsgebäude
- Abbruch der Bestandsgebäude
- Spezial-Tiefbau und Vorbereitung / Einrichtung der Baugrube
- Aushub
- Gebäude-Tiefbau für Neugebäude
- Gebäude-Hochbau für Neugebäude

Durch die vorliegend offenbarte Betoniertechnik wird es ermöglicht, bereits in der Phase der Baugrubenvorbereitung mit dem Abbruchmaterial eines bestimmten Bestandsgebäudes einen oder mehrere Tiefbau-Betonkörper herzustellen und deren Eigenschaften über einen Zeitraum von mehreren Wochen bis Monaten zu ermitteln und zu überwachen. Diese Tätigkeiten könnten stattfinden bevor weitere Betonierarbeiten für den Gebäude-Tiefbau oder Gebäude-Hochbau erfolgen. Die Erkenntnisse, die in der Phase des Spezial-Tiefbaus für bestimmte Abbruchmaterialien einer bestimmten Baustelle gesammelt werden, lassen sich somit für weitere Betonieraufgaben verwenden. Insbesondere können aus den Rezepturen, die im Spezial-Tiefbau eingesetzt und hinsichtlich ihrer Eigenschaften geprüft werden, insbesondere aus den Rezepturen für einen Bohrpfahl-Beton, neue Rezepturen für andere Einsatzzwecke abgeleitet werden. Weiterhin besteht im Spezialtiefbau und insbesondere bei der Herstellung von Tiefbau-Betonkörpern wie Betonpfählen oder Pfahlwänden eine bessere Möglichkeit, durch ein zugelassenes Prüfinstitut eine Sonderzulassung für die Verwendung des Vollrecycling-Betons, in Deutschland die "Zustimmung im Einzelfall" zu erhalten. Sobald eine solche Sonderzulassung für die spezifisch verfügbaren Abbruchmaterialien vorliegt, ist die Ermittlung und Testung weiterer Rezepturen deutlich vereinfacht.

Ein besonderer Vorteil für die Herstellung von Betonkörpern mit zulässigen Materialeigenschaften aus einem Vollrecycling-Beton sowie die Rezepturtestung ergibt sich daraus, dass gemäß dem offenbarten Betonierverfahren eine Herstellung des Betonkörpers in einer Kavität im Erdreich erfolgt. Denn in dieser Kavität ist der eingefüllte Vollrecycling-Beton über mehrere Tage oder Wochen nahezu vollständig gegen Wind- und Wettereinflüsse geschützt. Somit kann eine nahezu ungestörte Hydratation des Betons sichergestellt werden und mögliche parasitäre Nebeneffekte werden ausgeschaltet oder weitgehend vermieden. Die spezifischen Porositäts- und Trocknungsneigungs-Parameter des Abbruchmaterials haben für die Festigkeitsbildung daher einen nur geringen Einfluss.

Sobald festgestellt wurde, dass ein gemäß dem vorliegend offenbarten Betonierverfahren in der Kavität erzeugter Betonkörper aus dem Vollrecycling-Beton bestimmte Materialanforderungen erreicht oder häufig überschreitet, lässt sich daraus die Möglichkeit eines Einsatzes auch in anderen Betoniervorhaben ableiten, in denen bspw. ein Großteil der Oberfläche des Betons sofort oder schon frühzeitig dem Wind- und Wettereinfluss ausgesetzt sein wird.

Die Aspekte der Erfindung werden nachfolgend im Einzelnen erläutert. Zunächst erfolgt ein Überblick zu den wesentlichen Wirkbestandteilen der Erfindung und deren möglichen synergistischen Erfolg.

Ein erster Aspekt der Offenbarung betrifft ein Betonierverfahren zur Herstellung eines Tiefbau-Betonkörpers, nämlich eines Betonpfahles oder eines Betonwandungspfahls. Das Betonierverfahren umfasst die folgenden Schritte:
- Bereitstellen einer Kavität im Erdreich eines Baugeländes, wobei die Kavität durch einen Bohrvorgang erzeugt ist oder erzeugt wird.
- Bereitstellen von Beton, nämlich von Bohrpfahlbeton, der aus den Hauptbestandteilen Zuschlagstoff, Bindemittel und Wasser gebildet ist.
- Einbringen des Betons in die Kavität, sodass der hergestellte Betonkörper eine Außenkontur umfasst, die durch die Kavität im Erdreich definiert ist.

Das Betonierverfahren kann bevorzugt aus den im Rahmen der vorliegenden Offenbarung angegebenen Schritten bestehen. Es kann mit anderen Worten frei von anderen Schritten sein, insbesondere frei von der Zugabe anderer Materialien in den Beton und/oder in die Kavität, soweit nicht explizit vorgesehen.

In dem Betonierverfahren gemäß der vorliegenden Offenbarung ist vorgesehen, dass der Beton ein Vollrecycling-Beton ist und der Zuschlagstoff ein Recycling-Zuschlagstoff ist. Der Recycling-Zuschlagstoff kann insbesondere vollständig aus zerkleinertem Bauwerk-Abbruchmaterial bestehen.

Die Kavität ist zum Zeitpunkt der Einbringung des Vollrecycling-Betons bevorzugt leer, d.h. frei von anderen Gesteins- oder Erdmaterialien. Allerdings kann vor oder während der Einbringung des Vollrecycling-Betons eine Bewehrung, insbesondere ein Bewehrungskörper, weiter insbesondere ein Bewehrungskorb in die Kavität eingesetzt werden. Eine Bewehrung ist eine Verstärkung des Betonkörpers zur Erhöhung der Tragfähigkeit. Sie besteht in der Regel aus Stahl, insbesondere aus Armierungsstahl. Die Bewehrung erstreckt sich bevorzugt über einen Großteil oder die Gesamtheit der Höhe des Tiefbau-Betonkörpers.

Die Herstellung eines Tiefbau-Betonkörpers aus einem Vollrecycling-Beton erzeugt einen homogenen Körper, der die geltenden Anforderungen für Tiefbau-Betonkörper erfüllt und hat gleichzeitig besondere Vorteile im Hinblick auf die Einsparung von CO₂ bietet. Denn ein Bauwerk-Abbruchmaterial kann bevorzugt direkt auf dem Baugelände durch Abbruch eines Bestandsbauwerks bereitgestellt und für die Herstellung von Betonkörpern verarbeitet werden. Hierdurch entfallen die Transportwege für den Zuschlagstoff vollständig. Weiterhin konnte nachgewiesen werden, dass ein Beton gemäß der Verwendungsklasse Bohrpfahlbeton in der Ausbildung als Vollrecycling-Beton die notwendigen Soll-Materialeigenschaften eines Tiefbau-Betonkörpers erreicht und häufig übertrifft. Somit kann auf den Antransport von Natur-Zuschlagstoff für die Herstellung des Tiefbau-Betonkörpers vollständig verzichtet werden.

Durch die ausschließliche Verwendung von Recycling-Zuschlagstoff wird einerseits erreicht, dass auf Natur-Zuschlagstoffe wie Sand und Gesteinskörnungen vollständig verzichtet werden kann. Diese müssen auch nicht dem umliegenden Erdreich entnommen werden. Andererseits kann eine höhere Wieder- bzw. Weiterverwendungsrate des Abbruchmaterials erzielt werden.

Die erfindungsgemäße Ausführung sieht vor, dass der Bohrpfahlbeton, als Frischbeton noch genauer als am Verarbeitungsort hergestellter Frischbeton / in-situ Frischbeton erzeugt wird, insbesondere auf demselben Baugelände, auf dem die Herstellung des Tiefbau-Betonkörpers erfolgt und/oder der Abbruch eines Bestandsgebäudes erfolgt.

Durch die Herstellung als Frischbeton wird die Zeit zwischen der Herstellung und der Verarbeitung des Betons minimiert. Im Gegensatz zu einer Herstellung als Transportbeton bedarf es also keiner Fahrzeug-Transportphase zwischen Herstellung und Verarbeitung. Dementsprechend kann vorteilhafterweise auf die Verwendung von chemisch aktiven Zusatzstoffen teilweise oder vollständig verzichtet werden. Besonders bevorzugt wird der Beton frei von Verzögerungsmitteln zur Verzögerung des Abbindevorgangs hergestellt. Mit anderen Worten kann der Beton als Sofort-Verarbeitungsbeton hergestellt werden.

Gemäß einer Ausführung wird der Bohrpfahlbeton, spontan und in Abhängigkeit von einem momentanen Mengenbedarf erzeugt. Der momentane Mengenbedarf kann in Abhängigkeit von der Kavität oder einer (momentanen) Füllung der Kavität ermittelt werden. Direkt im Anschluss an die Ermittlung des momentanen Mengenbedarfs kann eine Anforderung für die Herstellung einer entsprechenden Menge an Beton ausgegeben werden, woraufhin der angeforderte Beton hergestellt und bereitgestellt wird. Wenn der angeforderte Beton bereitgestellt ist oder sobald der angeforderte Beton bereitgestellt wird, kann der Beton der Kavität zugeführt und in diese eingebracht werden. Dies begünstigt die angestrebte Ausbildung des Betons frei von Verzögerungsmitteln bzw. als Sofort-Verarbeitungsbeton.

Eine bevorzugte Ausführung sieht vor, dass das Bindemittel ein klinkerreduzierter Zement ist oder einen klinkerreduzierten Zement umfasst. Besonders bevorzugt kann der klinkerreduzierte Zement Hüttensand und/oder Kalksteinmehl (als Klinkersubstitut) enthalten. Es hat sich gezeigt, dass der Vollrecycling-Beton auch unter Einsatz von klinkerreduziertem Zement in der Herstellungsart als Frischbeton die Anforderungen an Tiefbau-Betonkörper erfüllt. Somit lassen sich die CO₂-Emissionsanteile auch im Bereich der Zementherstellung mittelbar reduzieren. Dies ist ein Folge-Vorteil, der dadurch begünstigt ist, dass bei der Herstellung des Vollrecycling-Betons als Frischbeton, insbesondere als in situ-Frischbeton, nicht mehr aus Sicherheitsgründen auf die Zementklasse CEM-I zurückgegriffen werden muss. Vielmehr lässt die begünstigte schnelle Abbindung des Vollrecycling-Betons und der weitgehende oder vollständige Verzicht auf Verzögerungsmittel zu, dass auch mit dem klinkerreduzierten Zement die benötigten Festigkeitseigenschaften erzielt werden.

Durch die am momentanen Mengenbedarf orientierte Herstellung und Bereitstellung des Betons können Übermengen sowie Untermengen bei der Betonherstellung vorteilhafterweise verhindert werden. Weiterhin wird der Beton erst produziert, wenn ein tatsächlicher momentaner Bedarf festgestellt und durch eine Anforderung für die Herstellung ausgegeben ist. Somit kann es nicht zu einer verfrühten Herstellung und Bereitstellung des Betons kommen, ohne dass die Verarbeitbarkeit des Betons sichergestellt wäre. Im Gegensatz zu einer für Transportbeton üblichen Vorausbestellung einer geschätzten zukünftigen Verarbeitungsmenge werden also die Nachteile einer Überproduktion, einer zu frühen Anlieferung sowie einer zu späten Anlieferung vermindert oder ausgeschlossen.

Gemäß einer Ausführung wird der Bohrpfahlbeton, in unterbrechungsfreier Direktzuförderung zu der Kavität erzeugt. In diesem Fall wird der erzeugte Beton direkt, d.h. insbesondere zeitunterbrechungsfrei und mit zeitlicher Überlappung von Herstellungsphase und Verarbeitungsphase, zu der Kavität zugeführt und in diese eingebracht. Sobald der momentane Mengenbedarf auf null absinkt oder wenn der momentane Mengenbedarf vollständig gedeckt ist, endet auch die Herstellung und Bereitstellung des Betons.

Durch die unterbrechungsfreie Direktzuförderung wird eine erhebliche Platzeinsparung auf dem Baugelände ermöglicht. Es bedarf einerseits nicht der Freihaltung eines Anfahrtswegs für ein Transportfahrzeug zu der Kavität und andererseits nicht der Freihaltung von Lager- oder Standflächen für die Zwischenspeicherung einer Betonmenge zwischen der Bereitstellung und der Weiterverarbeitung. Weiterhin werden die möglichen parasitären Nebeneffekte von Wind- oder Wettereinflüssen auf den Beton vermindert oder eliminiert. Der Beton kann insbesondere zwischen Herstellung und Einbringung in die Kavität vor Wind- und Wettereinflüssen abgeschirmt sein.

Gemäß einer Ausführung wird das Bereitstellen und insbesondere das Erzeugen des Recycling-Zuschlagstoffs, insbesondere des zerkleinerten Bauwerk-Abbruchmaterials, spontan und in Abhängigkeit von einem momentanen (quantifizierten) Mengenbedarf ausgeführt, insbesondere auf demselben Baugelände. Das Bereitstellen der Recycling-Zuschlagstoffe kann mittelbar aus dem momentanen Mengenbedarf des Betons abgeleitet und insbesondere maschinengesteuert berechnet und ausgeführt werden. Weiter unten werden bevorzugte Ausführungsvarianten für zugehörige Verfahrensschritte bzw. eine entsprechende Maschinensteuerung erläutert.

Durch die spontane und in Abhängigkeit von einem momentanen Mengenbedarf ausgeführte Bereitstellung der Recycling-Zuschlagstoffe kann eine bedarfsgerechte Verarbeitung des Abbruchmaterials eines Bestandsbauwerks zu demjenigen Anteil, der für die parallel erfolgende Herstellung von Tiefbau-Betonkörpern direkt sinnvoll verwendbar ist, erfolgen und insbesondere maschinengesteuert erfolgen. Ein darüber hinausgehender Anfall an Abbruchmaterial kann zum Abtransport freigegeben werden.

Mindestens ein Recycling-Zuschlagstoff wird bevorzugt durch eine steuerbare Brechvorrichtung hergestellt, weiter insbesondere mit einer steuerbaren Fraktionsgröße oder Fraktionsverteilung. Besonders bevorzugt wird mindestens ein Recycling-Zuschlagstoff mit einer angeforderten Fraktionsgröße und/oder Fraktionsverteilung hergestellt.

Somit wird verhindert, dass übermäßige Lagerflächen für die Zwischenlagerung des zur Betonherstellung geeigneten Abbruchmaterials oder auch von vorab hergestelltem Recycling-Zuschlagstoff auf dem Baugelände stattfindet. Mit anderen Worten wird ein besonders effizientes Flächenmanagement auf dem Baugelände während der Abbruch- und/oder Tiefbau-Phase begünstigt. Andererseits erfolgt eine gegebenenfalls emissionsbehaftete und/oder energieintensive Verkleinerung von Abbruchmaterial zur Bildung von Recycling-Zuschlagstoff nur in dem Umfang, der für die Durchführung der Tiefbau-Betonarbeiten förderlich und damit unter dem Aspekt der Emissionsreduktion sowie der CO₂-Einsparung direkt wirksam ist.

Alle vorgenannten Merkmale des Betonierverfahrens, der Betonherstellung und der Betonzusammensetzung können auch für die anderen Aspekte der vorliegenden Offenbarung genutzt werden. Ein Tiefbau-Betonkörper gemäß der vorliegenden Offenbarung kann bevorzugt gemäß dem vorgenannten Betonierverfahren hergestellt sein.

Für die Herstellung einer Pfahlwand können die Schritte des Betonierverfahrens bevorzugt mehrfach nacheinander ausgeführt werden. Eine besonders bevorzugte Ausführung sieht vor, dass eine Mehrzahl von benachbarten und sich abschnittsweise überlappenden Betonpfählen hergestellt wird. Dabei wird bevorzugt in einem ersten Durchgang jeder n-te Betonpfahl hergestellt, wobei n eine Zahl größer oder gleich 2 ist. Im ersten Durchgang verbleiben zwischen den hergestellten Pfählen also noch Freiräume. Die im ersten Durchgang hergestellten Pfähle sind bevorzugt ohne eine Bewehrung.

In einem zweiten Durchgang werden ein oder mehrere Betonpfähle in den Freiräumen hergestellt, wobei die dabei erzeugte Kavität mit mindestens einem der bereits gebildeten Betonpfähle überlappt. Mit anderen Worten wird bei der Herstellung eines Betonpfahls im zweiten Durchgang ein bereits bestehender Betonpfahl aus dem ersten Durchgang in einem Überlappungsbereich abgetragen. Die im zweiten Durchgang hergestellten Pfähle werden bevorzugt mit einer Bewehrung ausgebildet.

Ein eigenständiger Aspekt der vorliegenden Offenbarung, der mit dem ersten Aspekt kombinierbar ist, sieht ein Betonierverfahren zur Herstellung eines Betonkörpers vor, in welchem der Beton maschinengesteuert auf Basis von Kommando-Signalen bereitgestellt und/oder erzeugt wird, wobei das Betonierverfahren bevorzugt die folgenden Schritte umfasst oder durch diese Schritte gebildet ist:
Nach dem Bereitstellen einer Kavität, insbesondere einer Kavität im Erdreich, erfolgt die Ausgabe eines Anforderungskommandos für einen angeforderten Beton in Bezug auf diese Kavität.

Der angeforderte Beton wird durch eine Beton-Anmischvorrichtung gemäß dem Anforderungskommando erzeugt.

In Antwort auf das Anforderungskommando wird ein Bereitstellungskommando ausgegeben, wenn der Beton bereitgestellt ist oder sobald der Beton bereitgestellt wird.

Der Beton wird in Antwort auf das Bereitstellungskommando in die Kavität eingebracht.

Im Rahmen der vorliegenden Offenbarung kann die Formulierung "in Antwort auf" folgende Bedeutungen haben:
- Die angegebene Handlung (beispielsweise Herstellen des Betons oder Ausgabe eines Kommandos) wird durch das vorhergehende Kommando ausgelöst oder freigegeben;
- Die angegebene Handlung wird auf Basis der Daten oder Informationen ausgeführt, die in dem vorhergehenden Kommando enthalten oder durch das empfangene Kommando identifizierbar und mittelbar von einer externen Quelle abrufbar sind, beispielsweise durch einen im Kommando enthaltenen Verweis;
- Die angegebene Handlung, insbesondere die Ausgabe eines neuen Kommandos, erfolgt unter Bezugnahme auf das vorherige Kommando, sodass der Empfänger des neuen Kommandos eine Zuordnung zu dem vorherigen Kommando herstellen kann.

Weiter unten werden vorteilhafte Ausführungen unter Verwendung diverser Kommandos im Detail erläutert.

Ein weiterer Aspekt der Offenbarung betrifft ein Betonherstellungsverfahren zur bevorzugt maschinengesteuerten Herstellung von Beton in einer Beton-Anmischvorrichtung auf Basis von Kommando-Signalen. Die Beton-Anmischvorrichtung kann bevorzugt als mobile Beton-Anmischvorrichtung ausgebildet sein. Sie kann weiterhin bevorzugt auf demselben Baugelände angeordnet sein, auf dem ein Betonkörper in einer Kavität erzeugt wird. Das Betonherstellungsverfahren kann besonders bevorzugt zur Herstellung von Bohrpfahlbeton vorgesehen und ausgeführt sein. Es umfasst zumindest die folgenden Schritte.
- Empfangen eines Anforderungskommandos für einen angeforderten Beton.
- Maschinengesteuerte Auswahl einer Rezeptur für die Herstellung des Betons auf Basis des Anforderungskommandos.
- Herstellung eines Betons gemäß der ausgewählten Rezeptur aus den Hauptbestandteilen Zuschlagstoffe, Bindemittel und Wasser.
- Optional: Wenn der angeforderte Beton hergestellt und bereitgestellt ist oder sobald der angeforderte Beton hergestellt und bereitgestellt wird: Ausgabe eines Bereitstellungskommandos in Antwort auf das Anforderungskommando.

Die Betonherstellung einerseits auf Basis eines Anforderungskommandos und andererseits auf Basis einer Auswahl einer Rezeptur bietet den Vorteil, dass sehr zügig eine Betonherstellung gemäß sich individuell ändernden Anforderungen in angepasster Weise ausgeführt werden kann. Die Änderung der Anforderungen kann einerseits eine Änderung des Mengenbedarfs umfassen. Alternativ oder zusätzlich kann sie eine Änderung des Einsatzzwecks und/oder eine Änderung von Soll-Eigenschaften des angeforderten Betons umfassen. Beispielsweise können in direktem Wechsel zueinander ein Beton mit einer hohen Fließfähigkeit und ein Beton mit einer geringeren Fließfähigkeit hergestellt werden, wobei der Beton für die hohe Fließfähigkeit für eine Kavität oder einen Teil einer Kavität vorgesehen ist, wo eine zusätzliche Bewehrung, insbesondere ein Bewehrungskorb für einen Bohr-Betonpfahl eingebracht werden soll. Der Beton mit der geringeren Fließfähigkeit kann hingegen für eine Kavität oder einen Teil einer Kavität vorgesehen sein, wo keine Bewehrung vorzusehen ist. Alternativ oder zusätzlich sind beliebige andere Änderungen der Anforderung möglich.

Durch die maschinengesteuerte Umsetzung auf Basis von Kommando-Signalen kann sichergestellt werden, dass jeweils der richtige Beton mit den richtigen Eigenschaften in die jeweilige Kavität oder den jeweiligen Teil einer Kavität eingebracht wird.

Weiterhin wird über die Auswahl einer Rezeptur ermöglicht, dass ein Beton mit den geforderten Eigenschaften hergestellt wird, wobei die Auswahl der für diesen Beton notwendigen Hauptbestandteile in dem Moment festgelegt werden kann, in dem die Herstellung erfolgen soll, wobei neben den geforderten Soll-Eigenschaften auch weitere Daten verarbeitbar sind. Solche weiteren Daten können einerseits die Recycling-Zusatzstoffarten betreffen, die einerseits im Moment der Herstellung verfügbar sind. Andererseits kann die Herstellung an zusätzlichen Optimierungszielen ausgerichtet werden, wozu beispielsweise eine Minimierung der Gesamt-CO₂-Emissionen zählen kann.

Gemäß einer Ausführung können das Anforderungskommando und/oder das Bereitstellungskommando einen momentanen Mengenbedarf an Beton definieren. Der momentane Mengenbedarf kann auf beliebige Weise festgelegt sein. Er kann insbesondere eine Soll-Chargenmenge und/oder einen Soll-Materialstrom des Betons definieren.

Die Definition einer Soll-Chargenmenge kann geeignet sein, wenn ein Teil einer Kavität mit einem berechneten oder geschätzten Volumen vollständig gefüllt werden soll. Die Definition eines Soll-Materialstroms kann sinnvoll sein, wenn sich während der Einbringung des Betons eine Füllung der Kavität ergibt, die von einer erwarteten oder geschätzten Füllung abweicht, insbesondere um diese Abweichung zu kompensieren. Auf diese Weise kann während der Einbringungsphase des Betons eine kompensierende Adaption der Betonherstellung und/oder Betonbereitstellung erzielt werden.

Gemäß einer Ausführung kann entsprechend die Füllung der Kavität während der Einbringung des Betons erfasst oder überwacht werden. Ein momentaner Mengenbedarf des Betons kann in Abhängigkeit von der Kavität oder der Füllung der Kavität festgelegt oder angepasst werden. Gemäß einem weiteren Aspekt kann eine tatsächliche Beifügungsmenge mindestens eines Hauptbestandteils in einem hergestellten Beton erfasst werden. Besonders bevorzugt kann eine tatsächliche Beifügungsmenge von Recycling-Zuschlagstoff und/oder eine tatsächliche Beifügungsmenge von Bindemittel sowie optional eine tatsächliche Beifügungsmenge von Wasser erfasst werden. Mit anderen Worten kann bevorzugt eine tatsächliche Rezepturmischung eines hergestellten Betons erfasst werden. Bevorzugt kann die Betonherstellung derart angepasst sein, dass eine tatsächliche Rezepturmischung, die sich aus den erfassten tatsächlichen Beifügungsmengen ergibt, einer Soll-Rezepturmischung gemäß der ausgewählten Rezeptur angepasst wird.

Gemäß einer weiteren Ausführung ist vorgesehen, dass eine Mehrzahl von Rezepturen für die Herstellung von Beton, insbesondere für die Herstellung von Bohrpfahlbeton, in einer Beton-Rezepturdatenbank gespeichert und zur Auswahl bereitgestellt ist, insbesondere zur maschinengesteuerten Auswahl.

Die Rezepturen können beliebig ausgebildet sein. Bevorzugt umfasst die Beton-Rezepturdatenbank zumindest eine Rezeptur und weiter bevorzugt eine Mehrzahl von Rezepturen, bei denen der Zuschlagstoff ausschließlich aus Recycling-Zuschlagstoff besteht, insbesondere aus Recycling-Zuschlagstoff einer vorbestimmten Recycling-Zuschlagstoffart. Eine oder mehrere weitere Rezepturen können eine Mischung aus Recycling-Zuschlagstoff mit einer anderen Zuschlagstoffart umfassen. Im Rahmen der nachfolgenden Beschreibung wird von der bevorzugten aber nicht beschränkenden Ausführung ausgegangen, dass eine Rezeptur für einen Vollrecycling-Beton vorliegt und verwendet wird, der als Zuschlagstoff ausschließlich Recycling-Zuschlagstoff umfasst.

Die Bereitstellung in einer Beton-Rezepturdatenbank bietet verschiedene Vorteile. Einerseits können mehrere Rezepturen zur Auswahl bereitgestellt sein, die sich aus Labor-Testungen oder Verarbeitungstestreihen bereits während der Planungsphase eines Abbruchs ergeben und die etwaig manuell eingestellt sind. Andererseits können die Rezepturen in der RezepturDatenbank während einer Abbruch- und Tiefbauphase aktualisiert, ergänzt oder verfeinert werden. Somit können durch die Verwendung einer Beton-Rezepturdatenbank in einem ständigen Lernprozess, insbesondere in einem maschinengesteuerten Lernprozess auf Basis künstlicher IntelligenzAlgorithmen, die Kenntnisse über die Recycling-Fähigkeit und Verarbeitbarkeit von Abbruchmaterial ständig erweitern und sofort für die Herstellung von Recyclingbeton verfügbar gemacht werden.

Gemäß einer bevorzugten Ausführung können Messdaten über eine tatsächliche Beifügungsmenge von Hauptbestandteilen eines hergestellten Betons, insbesondere eines Bohrpfahlbetons, in einer Beton-Rezepturdatenbank abgelegt und einer Rezeptur zugeordnet werden. Die Messdaten können einen beliebigen Umfang haben. Sie können insbesondere eine vordefinierte Recycling-Zuschlagstoffart und deren Beifügungsmenge definieren. Gemäß einer weiteren Ausführung können Materialprüfdaten über die Eigenschaften eines erzeugten Betons erfasst werden. Solche Materialprüfdaten können auf beliebige Weise und in beliebiger Form definiert und erzeugt werden. Bevorzugt werden Materialprüfdaten zumindest anteilig maschinengesteuert erzeugt. Andererseits können manuell erzeugte Materialprüfdaten genutzt und gegebenenfalls mit maschinengesteuert erzeugten Materialprüfdaten kombiniert werden. Die Prüfdaten können bevorzugt einer Rezeptur und insbesondere derjenigen Rezeptur zuordenbar sein, nach welcher der Beton erzeugt wurde, von dem diese Materialprüfdaten erfasst werden. Bevorzugt umfassen Materialprüfdaten mindestens einen Ist-Materialeigenschaftswert, beispielsweise eine Ist-Fließfähigkeit oder einen Ist-Belastbarkeitsparameter. Die Materialprüfdaten werden bevorzugt in der geordneten Datenstruktur bzw. in der Beton-Rezepturdatenbank abgelegt und/oder verarbeitet, insbesondere durch künstliche Intelligenz-Algorithmen.

Eine Beton-Rezepturdatenbank gemäß der vorliegenden Offenbarung kann eine Datenverarbeitungseinrichtung sein, die Mittel zur Ausführung der nachfolgend genannten Arbeitsschritte umfasst. Alternativ oder zusätzlich kann die Beton-Rezepturdatenbank ein Computerprogrammprodukt sein, das Befehle umfasst, die bei der Ausführung des Computerprogrammprodukts durch eine Datenverarbeitungseinrichtung diese veranlassen, die nachfolgend genannten Arbeitsschritte auszuführen. Wiederum alternativ oder zusätzlich kann eine Beton-Rezepturdatenbank ein computerlesbares Medium sein, das Befehle umfasst, die bei der Ausführung durch einen Computer diesen veranlassen, die nachfolgend genannten Arbeitsschritte auszuführen. Wiederum alternativ oder zusätzlich kann eine Beton-Rezepturdatenbank als ein Datenträgersignal ausgebildet sein, welches das vorgenannte Computerprogrammprodukt überträgt.

Die Beton-Rezepturdatenbank umfasst eine geordnete Datenstruktur. Die geordnete Datenstruktur kann lokal gespeichert und/oder über eine zur Maschinenkommunikation vorbereitete Schnittstelle zugreifbar sein. Die geordnete Datenstruktur umfasst eine Mehrzahl von Rezepturen für die **Herstellung** von Beton aus den Hauptbestandteilen Zuschlagstoff, Bindemittel und Wasser. Mindestens eine Rezeptur definiert als Zuschlagstoff mindestens einen Recycling-Zuschlagstoff, insbesondere einen Recycling-Zuschlagstoff einer vorbestimmten Recycling-Zuschlagstoffart, und mindestens einen Soll-Materialeigenschaftswert des Betons.

Zumindest die folgenden Arbeitsschritte sind zur Ausführung vorgesehen und insbesondere durch die Mittel zur Ausführung oder die Befehle implementiert:
- Zur Auswahl stellen der gespeicherten Rezepturen; und
- Empfangen von Materialprüfdaten mit mindestens einem Ist-Materialeigenschaftswert und zuordnen der Materialprüfdaten zu der entsprechenden gespeicherten Rezeptur;
- Zur Auswahl stellen einer neuen Rezeptur oder einer geänderten Rezeptur, in der zumindest eine der folgenden Angaben auf Basis der empfangenen Materialprüfdaten erzeugt oder verändert ist:
   ∘ Mengenverhältnis der Hauptbestandteile, insbesondere umfassend einen Mengenanteil des Recycling-Zusatzstoffes einer vorbestimmten Recycling-Zusatzstoffart und/oder einen Mengenanteil des Bindemittels; und/oder
   ∘ Soll-Materialeigenschaftswert, insbesondere Soll-Belastbarkeitsparameter des Betons gemäß der Rezeptur.

Gemäß einer Ausführung umfasst die Rezepturdatenbank ein Programm-Modul, das auf Basis einer Mehrzahl von gespeicherten Rezepturen, die vorbestimmte Recycling-Zusatzstoffarten definieren, und auf Basis von empfangenen zugehörigen Materialprüfdaten automatisch eine neue Rezeptur berechnet.

Gemäß einer Ausführung kann eine neue Rezeptur eine Mischung aus mindestens zwei vorbestimmten Recycling-Zusatzstoffarten definieren. Eine neue Rezeptur kann weiterhin auf Basis der empfangenen Materialprüfdaten mindestens einen geschätzten Soll-Materialeigenschaftswert berechnen, der für den Beton gemäß der neuen Rezeptur und der Mischung aus mindestens zwei vorbestimmten Recycling-Zusatzstoffarten zu erwarten ist.

Das Programm-Modul kann beliebige Algorithmen umfassen und anwenden, um eine bestehende Rezeptur zu ändern oder eine neue Rezeptur zu erzeugen. Die Algorithmen können insbesondere künstliche Intelligenzalgorithmen umfassen. Eine Vielzahl von Dateneinheiten, die insbesondere Messdaten über eine tatsächliche Beifügungsmenge und/oder Materialprüfdaten über die Eigenschaften eines erzeugten Betons umfassen, können bevorzugt einen Lerndatensatz bilden, der gegebenenfalls iterativ mit dem Empfang neuer Messdaten und/oder Materialprüfdaten erweiterbar ist. Die Beton-Rezepturdatenbank gemäß der vorliegenden Offenbarung ist bevorzugt dazu ausgebildet, den Lerndatensatz einem Künstliche-Intelligenz-Algorithmus zuzuführen, wobei der Künstliche-Intelligenz-Algorithmus auf Basis des Lerndatensatzes die gespeicherten Rezepturen ändert und/oder neue Rezepturen erzeugt. Der Lerndatensatz kann Daten von verschiedenen Abbruch- und Betoniervorhaben umfassen und immer weiter ergänzt werden.

Gemäß einer bevorzugten Ausführung definiert mindestens eine gespeicherte Rezeptur eine Betonverwendungsklasse, die insbesondere zunächst mit dem Wert "Bohrpfahlbeton" festgelegt ist.

Die Beton-Rezepturdatenbank umfasst bevorzugt ein Programm-Modul, das die eine Rezeptur zugeordnete Betonverwendungsklasse ändert oder eine neue Rezeptur mit einer geänderten Betonverwendungsklasse erzeugt, wenn ein geänderter Soll-Materialeigenschaftswert, der für die gespeicherte Rezeptur auf Basis der empfangenen Daten, insbesondere der Materialprüfdaten und/oder Messdaten, geändert ist, einen vorbestimmten Verwendungsklassen-Zuordnungsgrenzwert erreicht oder überschreitet.

Auf diese Weise können bestimmte Rezepturen, die im Bereich des Tiefbaus und insbesondere des Spezial-Tiefbaus bei der Erstellung von Tiefbau-Betonkörpern aus Abbruchmaterial aufgefunden werden, auch für andere Verwendungszwecke mit deutlich höheren Anforderungen freigegeben und eingesetzt werden. Hierzu können insbesondere Verwendungen eines voll Recycling-Betons im Hochbau gehören. Somit kann durch die Beton-Rezepturdatenbank gemäß der vorliegenden Offenbarung eine Erweiterung des Verwendungsspektrums vorbereitet und eine noch größere Einsparung von CO₂-Emissionen vermittelt werden.

Ein weiterer Aspekt der vorliegenden Offenbarung betrifft eine Betoniervorrichtung, die eine Maschinensteuerung und einen Betonapplikator umfasst. Die Maschinensteuerung ist zur Steuerung der Betoniervorrichtung auf Basis von Kommando-Signalen ausgebildet. Der Betonapplikator ist zum Einbringen von zugeführtem Beton in eine Kavität ausgebildet.

Die Maschinensteuerung ist weiterhin dazu ausgebildet, ein Anforderungskommando für einen angeforderten Beton, insbesondere einen Bohrpfahlbeton, auszugeben und ein Bereitstellungskommando in Antwort auf das Anforderungskommando zu empfangen, und die Betoniervorrichtung in Antwort auf das Bereitstellungskommando derart zu steuern, dass der zugeführte Beton empfangen und in die Kavität eingebracht wird.

Die vorgenannte Betoniervorrichtung kann in verschiedenen Ausbildungen vorliegen, auf die weiter unten im Detail eingegangen wird. Durch die Betoniervorrichtung wird ein teilweise oder vollständig automatisierter Betoniervorgang ermöglicht, der gemäß einem Anforderung-Signalfluss ausgehend von der Kavität die Herstellung und Bereitstellung von Beton bedarfsgerecht auslöst und gemäß einem Rückmelde-Signalfluss das Einbringen des Betons in die Kavität durchführt. Hierdurch wird eine besonders ressourcenschonende und schnelle Verarbeitung des Betons ermöglicht.

Ein weiterer Aspekt der vorliegenden Offenbarung betrifft eine Beton-Anmischvorrichtung zur Herstellung von Beton aus den Hauptbestandteilen Zuschlagstoff, Bindemittel und Wasser. Die Beton-Anmischvorrichtung weist eine Zuschlagstoff-Zuführung auf. Gemäß der vorliegenden Offenbarung ist die Beton-Anmischvorrichtung als eine mobile Beton-Anmischvorrichtung ausgebildet und an der Zuschlagstoff-Zuführung ist ein Recycling-Zuschlagstoff bereitgestellt, insbesondere zerkleinertes Bauwerk-Abbruchmaterial.

Die Beton-Anmischvorrichtung ist somit dazu vorgesehen und geeignet, für die Herstellung eines Frischbetons auf einem Baugelände eingesetzt zu werden. Entsprechend unterstützt die vorgenannte Beton-Anmischvorrichtung die Herstellung eines Vollrecycling-Fischbetons für eine Direktverwendung auf einem Baugelände und trägt damit zur Einsparung von CO₂-Emissionen und weiterhin zur Direktverwertung von Abbruchmaterial bei.

Gemäß einer Ausführung kann die Beton-Anmischvorrichtung eine Maschinensteuerung aufweisen, die zur Steuerung der Beton-Anmischvorrichtung auf Basis von Kommando-Signalen ausgebildet ist. Die Beton-Anmischvorrichtung und insbesondere die Maschinensteuerung kann dazu ausgebildet sein, ein Beton-Herstellungsverfahren gemäß der vorliegenden Offenbarung auszuführen.

Ein weiterer Aspekt der vorliegenden Offenbarung betrifft einen Betonkörper, insbesondere einen Tiefbau-Betonkörper, weiter insbesondere einen Betonpfahl oder einen Betonwandungspfahl. Der Betonkörper umfasst eine Außenkontur, die durch eine Kavität, insbesondere eine Kavität im Erdreich definiert ist. Der Betonkörper ist aus einem Bohrpfahlbeton gefertigt, der aus den Hauptbestandteilen Zuschlagstoffe, Bindemittel und Wasser gebildet ist. Der Betonkörper gemäß der vorliegenden Offenbarung ist aus einem Bohrpfahlbeton gebildet, der als Vollrecycling-Beton gebildet ist, wobei die Zuschlagstoffe vollständig aus Recycling-Zuschlagstoffe bestehen, insbesondere aus zerkleinertem Bauwerk-Abbruchmaterial. Durch den Betonkörper gemäß der vorliegenden Offenbarung kann ein besonders hohes Maß an CO₂-Einsparung erzielt werden, weil die Zuschlagstoffe vollständig aus in-situ Abbruchmaterial bestehen können, d.h. aus Abbruchmaterial das durch den Abbruch eines Bestandsbauwerks auf demselben Baugelände erzeugt ist oder wird, auf welchem der Betonkörper gefertigt ist.

Der Tiefbau-Betonkörper kann ein Einzelpfahl sein. Er kann ferner bevorzugt eine Pfahlwand sein, die aus einer Mehrzahl von benachbarten und sich abschnittsweise überlappenden Betonpfählen (Betonwandungspfählen) gebildet ist. Bevorzugt kann ein Teil dieser Betonpfähle, insbesondere jeder n-te Betonpfahl einen Bewehrungskörper umfassen. n ist dabei eine Zahl größer oder gleich 2. Der Tiefbau-Betonkörper kann weiterhin eine Baugrubeneinfassung sein.

Alternativ oder zusätzlich kann ein Tiefbau-Betonkörper gemäß der vorliegenden Offenbarung, insbesondere ein Betonpfahl (Einzelpfahl oder Betonwandungspfahl) ein Lastaufnahmekörper unter einem anderen Hochoder Tiefbaukörper sein, der bspw. die Lasteinbringung in den Boden unterstützt. Ein Tiefbau-Betonkörper gemäß der vorliegenden Offenbarung kann ferner Bestandteil einer Rasteranordnung sein. Die Rasteranordnung kann bevorzugt eine Mehrzahl von Einzelpfählen oder Betonwandungspfählen in einer Makro-Anordnung haben. Die Makro-Anordnung kann statisch auf die Lasteinleitungsbedürfnisse zur Abstützung eines aufliegenden Tiefbau- oder Hochbau-Körpers abgestimmt sein.

In der nachfolgenden detaillierten Zeichnungsbeschreibung sowie in den Unteransprüchen sind weitere bevorzugte Ausführungen der Erfindung angegeben.

Die Erfindung ist in den Zeichnungen beispielhaft und schematisch dargestellt.

Diese zeigen:
- Figur 1:: eine Übersichtsdarstellung der Betoniertechnik gemäß der vorliegenden Offenbarung;
- Figur 2:: eine Detaildarstellung zur Erläuterung des Betonierverfahrens, des Beton-Herstellungsverfahrens, einer Betoniervorrichtung, einer Beton-Anmischvorrichtung sowie eines Tiefbau-Betonkörpers;
- Figuren 3-6:: Zustandsdarstellungen zur Erläuterung möglicher Vorgänge bei der Herstellung eines Tiefbau-Betonkörpers.

Die Erfindung betrifft ein Betonierverfahren zur Herstellung eines Tiefbau-Betonkörpers 1, nämlich eines Betonpfahles oder eines Betonwandungspfahls. Es umfasst die Schritte:
Bereitstellen einer Kavität 2 im Erdreich 3 eines Baugeländes 20, wobei die Kavität 2 durch einen Bohrvorgang erzeugt ist oder wird: Bereitstellen von Bohrpfahlbeton 4', der aus den Hauptbestandteilen 5 Zuschlagstoffe 11, Bindemittel 15 und Wasser 16 gebildet ist; Einbringen des Betons 4 in die Kavität 2. Der Beton 4 ist ein Vollrecycling-Beton und die Zuschlagstoffe 11 sind Recycling-Zuschlagstoffe 11' und bestehen bevorzugt vollständig aus zerkleinertem Bauwerk-Abbruchmaterial, das weiter bevorzugt durch den Abbruch eines Bestandsgebäudes auf demselben Baugelände bereitgestellt wird. Der Beton 4 wird bevorzugt durch einen Anforderungs-Signalfluss 25 mittels Kommando-Signalen S1, S2, S5 ausgehend von einem momentanen Mengenbedarf Q an Beton für eine Kavität 2 hergestellt. Für die Herstellung werden Rezepturen R verwendet, die in einer Rezeptur-Datenbank 90 zum Abruf bereitgestellt werden. Für den hergestellten Beton werden Messdaten K und Materialprüfdaten M ermittelt, die der Rezeptur-Datenbank 90 zugeführt und der betreffenden Rezeptur R zugeordnet werden. Die Rezeptur-Datenbank 90 ändert die bestehenden Rezepturen R auf Basis der empfangenen Daten und entwickelt eigentätig neue Rezepturen R, die wiederum zum Abruf bereitgestellt werden. Eine mobile Beton-Anmischvorrichtung stellt einen Beton auf Basis eines Anforderungskommandos S1, S2 her und bezieht eine für den angeforderten Beton 6 geeignete Rezeptur, insbesondere gemäß definierten Soll-Materialeigenschaften. Der hergestellte Beton 4 wird bereitgestellt und es wird ein Bereitstellungskommando S3, S4 ausgegeben. Das Einbringen des Betons 4 in eine Kavität erfolgt in Antwort auf das Bereitstellungskommando S3, S4.

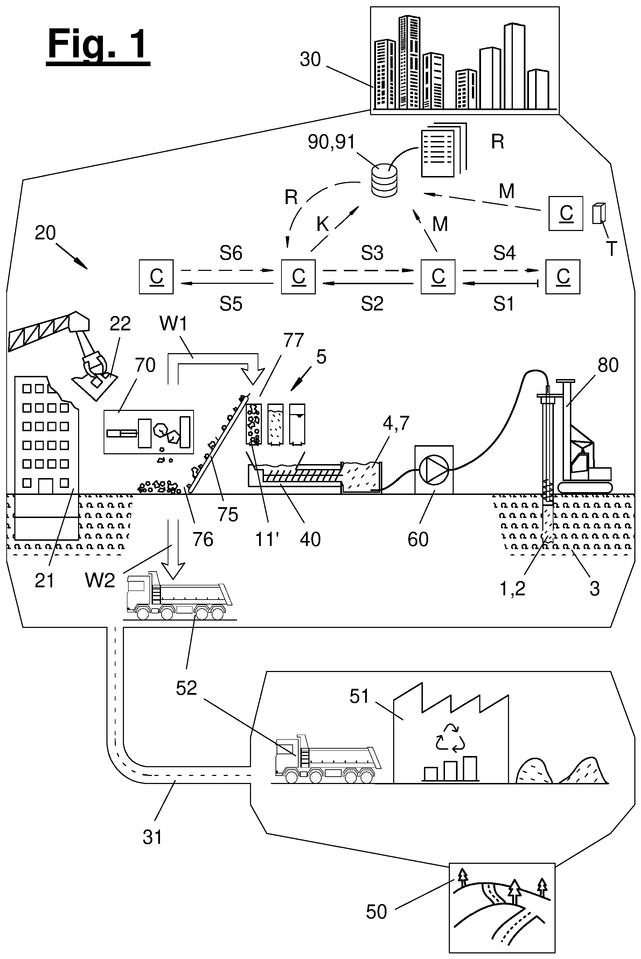

Figur 1 zeigt im oberen Bereich eine schematische Darstellung eines Baugeländes 20. Das Baugelände 20 kann sich insbesondere in einem Ballungsraum 30 befinden, d.h. einem Raum mit hoher Bebauungs- und/oder Verkehrsdichte. Das Baugelände 20 kann über ein Straßennetz 31 mit einem entfernten Ort 50 verbunden sein, wobei der entfernte Ort insbesondere ein Raum mit niedriger Bebauungs- und/oder Verkehrsdichte ist.

Bei bisher bekannten Abbruch- und Neubebauungsvorhaben werden zahlreiche Transportvorgänge zum Transport von Abbruchmaterial 22 und/oder Transportbeton zwischen dem Baugelände 20 und einem entfernten Ort 50 ausgeführt. An dem entfernten Ort 50 kann beispielhaft das in Figur 1 gezeigte Recycling-Unternehmen 51 ansässig sein. Nach bisheriger Praxis wird das gesamte Abbruchmaterial 22 über Transportfahrzeuge 52 von dem Baugelände 20 über das Straßennetz 31 an den entfernten Ort 50 und insbesondere zu dem Recycling-Unternehmen 51 befördert, wofür ein hoher Anteil an CO₂-Emissionen erforderlich ist. Andererseits wird nach bisheriger Praxis der Beton für die Erstellung von neuen Betonkörpern von einem entfernten Ort 50, insbesondere von einem stationären Beton-Mischwerk (nicht dargestellt) über das Straßennetz 31 zu dem Baugelände 20 befördert. Der an dem entfernten Ort 50 hergestellte Beton, der über ein Transportfahrzeug 52 unter Nutzung des Straßennetzes 31 angeliefert wird, wird nachfolgend als Transportbeton bezeichnet.

Nach bisheriger Praxis wird jegliches Abbruchmaterial 22, das durch den Abbruch eines Bestandsbauwerks 21, insbesondere eines Bestandsgebäudes, entsteht, dem Abtransport W2 von Abbruchmaterial zugeführt.

Die Betoniertechnik gemäß der vorliegenden Offenbarung sieht vor, dass zumindest ein Teil des Abbruchmaterials 22 einer Direktverwertung W1 von Abbruchmaterial zugeführt wird und daher nicht mit einem Transportfahrzeug 52 abtransportiert werden muss. Hierdurch werden CO₂-Emissionen eingespart.

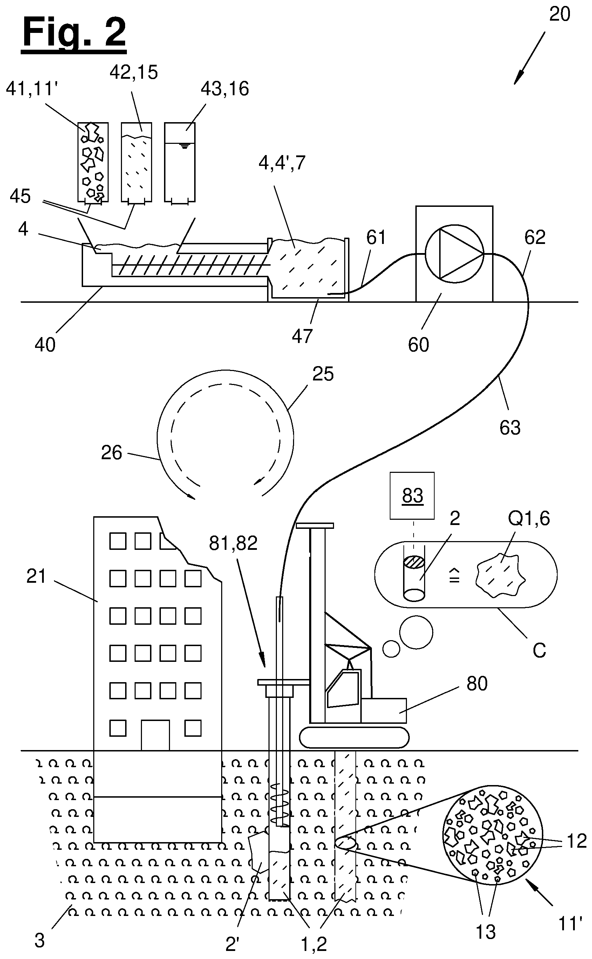

Die Betoniertechnik gemäß der vorliegenden Offenbarung sieht weiterhin vor, dass die Direktverwertung W2 von Abbruchmaterial durch einen Anforderungs-Signalfluss 25 ausgehend von einem momentanen Mengenbedarf Q an Beton 4 ausgeführt und insbesondere gesteuert wird. Die Direktverwertung erfolgt weiter bevorzugt durch eine Maschinensteuerung C, die durch eine oder mehrere Datenverarbeitungseinrichtungen gebildet sein kann. In der Darstellung von Figur 2 sind ein Anforderungs-Signalfluss 25 und ein in Antwort darauf erfolgender Rückmelde-Signalfluss 26 unabhängig von einer bestimmten Datenverarbeitungseinrichtung dargestellt. Die Umsetzung von Anforderungs-Signalfluss 25 und/oder Rückmelde-Signalfluss 26 kann auf beliebige Weise und unter Mitwirkung einer oder mehrerer Datenverarbeitungsvorrichtungen erfolgen. An der Direktverwertung W1 können insbesondere ein Betonierverfahren und/oder ein BetonHerstellungsverfahren und/oder eine Beton-Rezepturdatenbank gemäß der vorliegenden Offenbarung beteiligt sein. Der Signalfluss 25,26 wird bevorzugt anteilig durch ein Anforderungskommando S1,S2, ein Bereitstellungskommando S3,S4, ein Materialzuführungskommando S5 und/oder ein Materialverfügbarkeitskommando S6 gebildet. Weiterhin können an dem Signalfluss der Austausch von Messdaten K und/oder Materialprüfdaten M beteiligt sein.

In der Darstellung gemäß Figur 1 ist der Anforderungs-Signalfluss beispielhaft in Kommando-Signale S1, S2, S5 aufgeteilt, die zwischen verschiedenen Datenverarbeitungseinrichtungen ausgetauscht werden. Diese Datenverarbeitungseinrichtungen können jeweils einzeln oder in Kombination Bestandteil einer Maschinensteuerung C sein. In der Figur 1 ist weiterhin ein Rückmelde-Signalfluss 26 aufgeteilt in mehrere Kommando-Signale S3, S4, S6 aufgeteilt dargestellt, die ebenfalls zwischen den Datenverarbeitungseinrichtungen ausgetauscht werden. Abweichend zu der Darstellung in Figur eins ist eine beliebige andere Verteilung der Datenverarbeitungseinrichtungen möglich. Ferner ist es möglich, alle Vorgänge gemäß der offenbarten Betoniertechnik in einer gemeinsamen Maschinensteuerung C auszuführen, bzw. in einer gemeinsamen Datenverarbeitungseinrichtung auszuführen.

Alle Schritte, die nachfolgend als Bestandteil eines der Verfahren gemäß der vorliegenden Offenbarung beschrieben sind, können ein Bestandteil der Direktverwertung W1 von Abbruchmaterial, insbesondere ein Bestandteil des Betonierverfahrens und/oder des Beton-Herstellungsverfahrens sein.

Die Betoniertechnik wird anhand der Herstellung eines Betonkörpers, insbesondere eines Tiefbau-Betonkörpers 1 erläutert und ist in den Figuren 2 sowie 3 bis 6 skizziert. Der Betonkörper wird durch ein von Beton 4 in eine Kavität 2 erzeugt. Die Kavität 2 kann insbesondere eine Kavität 2 im Erdreich 3 des Baugeländes 20 sein. Somit weist der Tiefbau-Betonkörper 1 eine Außenkontur auf, die durch die Kavität 2 definiert ist. Bei dem Betonkörper handelt es sich um einen Betonpfahl oder einen Betonwandungspfahl. Betonpfähle werden im Spezialtiefbau häufig errichtet, um die Begrenzung einer Baugrube zu bilden. Innerhalb der Begrenzung kann das Erdreich abgegraben werden, außerhalb der Begrenzung kann das Erdreich verbleiben und gegen Abrutschen abgestützt werden. Im SpezialTiefbau werden Betonkörper häufig durch einen Beton der Verwendungsklasse Bohrpfahlbeton erzeugt. Solche Betonkörper sind in der Regel dafür vorgesehen, zunächst temporär eine abstützende Funktion auszuführen, insbesondere die Begrenzung einer Baugrube zu bilden, während ein neues Bauwerk errichtet wird. Nach der Erstellung des neuen Bauwerks ist in der Regel der Bereich innerhalb der Begrenzung wieder mit Erdreich aufgefüllt, sodass der Tiefbau-Betonkörper keine weitere Stützfunktion erfüllen muss. Alternativ kann ein Betonkörper gemäß der vorliegenden Offenbarung - auch und gerade wenn der Beton die Verwendungsklasse Bohrpfahlbeton hat - eine dauerhafte Stützfunktion haben.

An einen Tiefbau-Betonkörper werden in der Regel geringe ästhetische Anforderungen gestellt. Ein Tiefbau-Betonkörper ist daher ideal geeignet für eine Herstellung aus einem Beton, bei dem der Zuschlagstoff 11 vollständig aus Recycling-Zuschlagstoff 11' gebildet ist. Der Recycling-Zuschlagstoff 11' kann insbesondere vollständig aus zerkleinertem Bauwerk-Abbruchmaterial bestehen.

Wie in Figur 2 dargestellt, bleibt der Zuschlagstoff 11, insbesondere der Vollrecycling-Zuschlagstoff 11' vollständig im abgebundenen Betonmaterial vorhanden. Durch Aufschneiden des Betonkörpers 1 und Analysieren des Schnittbildes können sowohl die verwendeten Zuschlagstoffe 11' als auch das verwendete Bindemittel sowie die Produkte der Hydratation bestimmt werden.

Es ist daher möglich, einen Tiefbau-Betonkörper 1 auch in größeren Zeitabständen nach dessen Herstellung zu untersuchen. Da ein TiefbauBetonkörper häufig nach Abschluss der Errichtung des neuen Bauwerks keine direkte Nutzfunktion mehr hat, eignet er sich ideal für die Durchführung von Langzeit-Studien. Insbesondere kann ein Tiefbau-Betonkörper 1 als ein Testkörper T aufgefasst werden, der in bestimmten Zeitabständen nach der Herstellung des Betons üblichen Materialprüfungen unterzogen werden kann. Natürlich können zusätzlich auch separate Testkörper T erzeugt werden, um Materialprüfungen durchzuführen. Eine Materialprüfung kann insbesondere die Ermittlung von Ist-Materialeigenschaftswerten umfassen, weiter insbesondere die Bestimmung von Ist-Belastbarkeitsparametern des Betons.

Der Tiefbau-Betonkörper gemäß der vorliegenden Offenbarung umfasst bevorzugt zerkleinertes Bauwerk-Abbruchmaterial, das weiter insbesondere Altbetonbruch 12 und/oder Mauerwerkbruch 13 umfassen kann. Das zerkleinerte Bauwerk-Abbruchmaterial kann alternativ aus Altbetonbruch 12 und/oder aus Mauerwerkbruch 13 bestehen.

Das zerkleinerte Bauwerk-Abbruchmaterial wird bevorzugt durch eine (mobile) Brechvorrichtung 70 bereitgestellt. Die Brechvorrichtung 70 ist bevorzugt als ein Prallplattenbrecher ausgebildet. Der Brechvorrichtung 70 kann iterativ ein geeignetes Abbruchmaterial 22, insbesondere ein Altbeton- und/oder ein Mauerwerk zugeführt werden.

Eine bevorzugte Ausführung sieht vor, dass die Brechvorrichtung steuerbar ausgebildet ist und eine einstellbare Fraktionsgröße und/oder Fraktionsverteilung herstellt. Die Fraktionsgröße und/oder Fraktionsverteilung kann insbesondere gemäß einer Anforderung eingestellt sein oder werden.

Das zerkleinerte Bauwerk-Abbruchmaterial hat bevorzugt eine Fraktionsgröße im Wertebereich von 0-32 mm, insbesondere von 0-16 mm. Mit anderen Worten ist das Bauwerk-Abbruchmaterial bevorzugt ein Korngemisch, weiter bevorzugt ein Korngemisch mit einem Feinteil-Anteil (und einer groben Gesteinskörnung). Weiterhin kann das zerkleinerte Abbruchmaterial aus einer Fraktionsverteilung bestehen, die den Wertebereich von 0-32 mm, insbesondere von 0-16 mm abdeckt. Eine Rezeptur kann vorsehen, dass zwei oder mehr Fraktionsgrößen mit unterschiedlichen Wertebereichen gemischt werden, insbesondere zwei Korngemische, die beide über einen Feinteil-Anteil verfügen, weiter insbesondere die Fraktionsgröße im Wertebereich 0-16 mm mit der Fraktionsgröße im Wertebereich 0-32mm.

Die Fraktionsgröße und/oder die Fraktionsverteilung des zerkleinerten Abbruchmaterials kann Gegenstand der Bestimmung einer Recycling-Zuschlagstoffart sein.

Durch die Fraktionsgröße und die Fraktionsverteilung werden die Ist-Materialeigenschaftswerte einerseits des Frischbetons sowie andererseits des abgebundenen Betons beeinflusst. Eine wesentliche Materialeigenschaft des Frischbetons ist die Fließfähigkeit. Eine wesentliche Materialeigenschaft des abgebundenen Betons ist die Belastbarkeit gegenüber Druck-, Zug- oder Scherkräften.

Der Bohrpfahlbeton 4', der für die Herstellung eines Betonkörpers gemäß der vorliegenden Offenbarung, insbesondere eines Tiefbau-Betonkörpers 1 verwendet wird, ist bevorzugt frei von chemisch aktiven Zusatzstoffen. Der Beton kann insbesondere frei von Verzögerungsmitteln zur Verzögerung des Abbindevorgangs sein. Der Tiefbau-Betonkörper gemäß der vorliegenden Offenbarung weist entsprechend bevorzugt eine Struktur im Schliffbild auf, die sich aus der Hydratation eines Bindemittels ohne Verzögerungsmittel ergibt.

Der Bohrpfahlbeton 4' kann alternativ oder zusätzlich frei von inaktiven Zusatzstoffen sein, insbesondere frei von Gesteinsmehlen und/oder frei von Flugasche. Alternativ können Gesteinsmehle und/oder Flugasche in dem Beton, insbesondere in dem Bohrpfahlbeton enthalten sein, insbesondere als ein Bestandteil des Bindemittels.

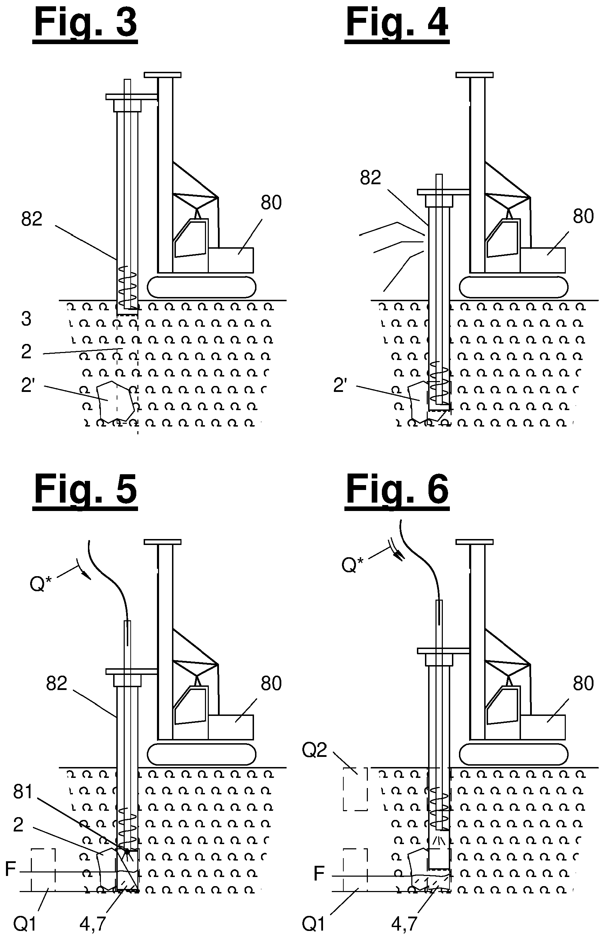

Figuren 3 bis 6 zeigen den Betrieb einer Betoniervorrichtung 80 gemäß der vorliegenden Offenbarung bei der Herstellung eines Tiefbau-Betonkörpers 1 in der Form eines Bohrpfahls. Die Betoniervorrichtung 80 umfasst eine Maschinensteuerung C und einen Betonapplikator 81. Die Maschinensteuerung C ist dazu ausgebildet, ein Anforderungskommando S1, S2 für einen angeforderten Beton 4 auszugeben. Die Ausgabe des Anforderungskommandos erfolgt bevorzugt nach dem Bereitstellen einer Kavität zwei, insbesondere einer Kavität 2 im Erdreich 3.

In den Beispielen der Figuren umfasst die Betoniervorrichtung 80 eine maschinengesteuerte Bohrvorrichtung 82. Die Bohrvorrichtung 82 ist bevorzugt dazu ausgebildet, die Kavität 2 im Erdreich 3 zu erzeugen. Die Maschinensteuerung C ist bevorzugt dazu ausgebildet, das Anforderungskommando S1 auszugeben, wenn oder sobald die Kavität 2 hergestellt ist.

In den gezeigten Beispielen ist die Bohrvorrichtung 82 einerseits durch ein Bohrrohr und andererseits durch ein Bohrwerkzeug an einer drehbaren Stange gebildet. Das Bohrrohr kann am unteren Ende eine im wesentlichen kreisringförmige Bohrkrone aufweisen. Das Bohrwerkzeug kann bevorzugt als eine Bohrschnecke ausgebildet sein. Die Stange kann eine teleskopierbare Stange sein. Sie kann alternativ oder zusätzlich als eine Hohlstange ausgebildet sein und eine Betonführungspassage aufweisen.

Im Beispiel der Figuren 3 bis 4 werden das Bohrrohr und das Bohrwerkzeug unter einer angetriebenen Drehbewegung um die Hochachse in das Erdreich 3 eingeführt, wobei das Erdreich innerhalb des Bohrrohrs nach oben gefördert und von der Bohrvorrichtung 82 ausgestoßen wird. Das ausgestoßene Erdreich wird in der Regel abtransportiert. Wenn das Bohrrohr die Soll-Tiefe erreicht hat, können das Bohrwerkzeug und eventuell auch das Bohrrohr wieder nach oben ausgezogen werden. Vor oder während der Auszugsbewegung des Bohrrohrs wird der als Vollrecycling-Beton ausgebildete Bohrpfahlbeton 4' in die Kavität 2 eingebracht, die durch den Bohrvorgang erzeugt ist. Das tatsächliche Volumen der Kavität 2 kann aus verschiedensten Gründen von einem geschätzten Volumen abweichen, das sich beispielsweise aus dem Durchmesser des Bohrrohrs und der Eindringtiefe der Bohrvorrichtung 82 berechnen lässt. In dem Beispiel der Figuren 3 bis 5 ist beispielhaft ein Fall gezeigt, dass im Erdreich eine Verborgene Kavität 2' vorliegt. Die verborgene Kavität wird während des Bohrvorgangs anteilig überschnitten. Wenn in dem Zustand von Figur 5 bzw. im Übergang zu Figur 6 das Bohrrohr herausgezogen wird, wird das Volumen der verborgenen Kavität 2' mit dem gebotenen Volumen verbunden. Daraus ergibt sich, dass durch die Einbringung einer vorab geschätzten Menge an Beton eine geringere Füllung F, insbesondere eine geringere momentane Füllhöhe, erreicht wird, als gemäß dem geschätzten oder berechneten Bohrvolumen zu erwarten wäre. Ein solcher Fall kann dazu führen, dass für die Herstellung eines Tiefbau-Betonkörpers 1 bis zur Erreichung einer geforderten Soll-Füllung der Kavität mehr Beton eingebracht werden muss als ursprünglich geschätzt.

Andererseits ist ein Fall denkbar, bei dem ein Minderbedarf an Beton entsteht. Das heißt, es kann durch die Einbringung einer vorab geschätzten Menge an Beton eine höhere Füllung F erreicht wird, als gemäß dem geschätzten oder berechneten Bohrvolumen zu erwarten wäre. Ein solcher Fall kann beispielweise durch einen Schätzfehler entstehen.

Die Betoniervorrichtung gemäß der vorliegenden Offenbarung umfasst bevorzugt ein Erfassungsmittel 83 oder ist mit einem Erfassungsmittel 83 signaltechnisch verbunden. Das Erfassungsmittel 83 ist dazu ausgebildet, eine Kavität 2 und/oder die Füllung F der Kavität 2 zu erfassen. Es ist insbesondere bevorzugt vorgesehen, dass ein Anforderungskommando S1, S2 auf Basis einer erfassten Kavität 2 und/oder einer erfassten Füllung F der Kavität ausgegeben wird. Besonders bevorzugt kann der momentane Mengenbedarf Q an Beton auf Basis der erfassten Kavität 2 und/oder der erfassten Füllung F festgelegt sein. In dem Beispiel von Figur 5 wird zunächst ein momentaner Mengenbedarf Q als Volumen einer Soll-Chargenmenge Q1 festgelegt. Diese Festlegung kann beispielsweise auf Basis einer Schätzung oder Berechnung des Volumens für den Fußabschnitt eines Bohrpfahls bestimmt sein. Dass Anforderungskommando S1 wird von der Beton-Anmischvorrichtung 4 empfangen. Die Beton-Anmischvorrichtung stellt einen Beton 4 in Antwort auf den Empfang des Anforderungskommando S1 her mit anderen Worten ist die Beton-Anmischvorrichtung 40 dazu ausgebildet, die Herstellung in Antwort auf das Anforderungskommando S1 auszuführen und insbesondere zu steuern.

Die Herstellung des Betons 4 kann auf beliebige Weise erfolgen. Bevorzugt ist die Beton-Anmischvorrichtung 40 als eine mobile Vorrichtung ausgebildet. An der Zuschlagstoff-Zuführung 41 der Beton-Anmischvorrichtung ist ein Recycling-Zuschlagstoff 11' bereitgestellt. Die Zuschlagstoff-Zuführung 41 kann bevorzugt einen Volumenspeicher und/oder eine Dosiervorrichtung 45 umfassen. Der Volumenspeicher kann ein Recycling-Zuschlagstoff Volumenspeicher sein. Er kann teilweise oder vollständig mit einem Recycling-Zuschlagstoff gefüllt sein. Die Dosiervorrichtung kann eine Recycling-Zuschlagstoff Dosiervorrichtung sein. Sie kann einen Recycling-Zuschlagstoff mengenmäßig dosieren.

Gemäß einer Ausführung kann die Beton-Anmischvorrichtung 40 mindestens zwei Zuschlagstoff-Zuführungen 41 für (unterschiedliche) Recycling-Zuschlagstoffe 11' aufweisen. Bevorzugt ist jeder Recycling-Zuschlagstoff 11' einer der Zuschlagstoff-Zuführungen 41 von einer vorbestimmten Recycling-Zuschlagstoffart.

Bevorzugt können mindestens zwei Zuschlagstoff-Zuführungen 41 und/oder mindestens zwei Dosiervorrichtungen 45 für Recycling-Zuschlagstoffe 11' von unterschiedlichen (vorbestimmten) Recycling-Zuschlagstoffarten vorgesehen sein.

Die Beton-Anmischvorrichtung 40 ist dazu ausgebildet, die Herstellung eines Betons 4 gemäß einer Rezeptur R durchzuführen.

Gemäß einer Ausführung ist die Beton-Anmischvorrichtung 40 dazu ausgebildet, eine Rezeptur R aus einer Menge von Rezepturen R abzurufen, die insbesondere in einer geordneten Datenstruktur 91, weiter insbesondere in einer Beton-Rezepturdatenbank 90 zum Abruf bereitgestellt ist.

Eine Beton-Rezepturdatenbank 90 gemäß der vorliegenden Offenbarung kann Bestandteil einer Maschinensteuerung C bzw. einer Datenverarbeitungseinrichtung der Beton-Anmischvorrichtung 40 sein. Alternativ kann eine Beton-Rezepturdatenbank eine eigene Datenverarbeitungseinrichtung sein oder als ein Computerprogramm vorliegen, das auf einer Datenverarbeitungseinrichtung ausgeführt wird. Der Zugriff auf die geordnete Datenstruktur 91 der Beton-Rezepturdatenbank 90 kann auf beliebige Weise erfolgen, insbesondere durch einen Direktzugriff oder durch einen Fernzugriff über eine Kommunikationsschnittstelle.

Die Beton-Anmischvorrichtung 40 ist dazu ausgebildet, ein Bereitstellungskommando S3 in Antwort auf das Anforderungskommando S1 auszugeben, wenn der Beton 4 bereitgestellt ist oder sobald der Beton 4 bereitgestellt wird.

Der hergestellte Beton 4 kann auf beliebige Weise bereitgestellt werden, insbesondere als kontinuierlicher Materialstrom und/oder als Chargenmenge. In dem Beispiel der Figur 2 umfasst die Beton-Anmischvorrichtung 40 eine Mischkammer, in welche die Hauptbestandteile 5 einbringbar sind, insbesondere unter gesteuerter Betätigung der einen oder mehreren Dosiervorrichtungen 45. Die Einbringung der Hauptbestandteile 5 erfolgt bevorzugt gemäß Soll-Beigabemengen, die in der Rezeptur R festgelegt sind. Die Beton-Anmischvorrichtung 40 kann entsprechend eine Bindemittel-Zuführung 42, gegebenenfalls mit einem Volumenspeicher, und/oder eine Wasser-Zuführung 43 aufweisen, die jeweils mit einer Dosiervorrichtung 45 ausgebildet sein können.

Der Beton 4 wird in der Mischkammer hergestellt und über ein beliebiges Fördermittel bereitgestellt. Im Beispiel der Figur 2 ist das Fördermittel durch eine Mischschnecke gebildet. Es sind beliebige andere Ausführungen möglich.

Der hergestellte Beton kann in einem Vorlagevolumen 47 als eine Chargenmenge bereitgestellt werden. Alternativ oder zusätzlich kann der hergestellte Beton direkt als ein Massenstrom bereitgestellt werden.

Die Beton-Anmischvorrichtung 40 kann auf beliebige Weise mit der Betoniervorrichtung 80 verbunden sein. Bevorzugt ist zwischen der Bereitstellung des hergestellten Betons 4, insbesondere des hergestellten Frischbetons, und der Betoniervorrichtung 80 eine Beton-Fördereinrichtung 60 vorgesehen. Die Beton-Fördereinrichtung 60 kann beliebig ausgebildet sein. Sie kann Bestandteil der Beton-Anmischvorrichtung 40 oder Bestandteil der Betoniervorrichtung 80 sein. Alternativ kann eine separate Beton-Fördereinrichtung 60 vorgesehen sein.

In den Zeichnungen ist beispielhaft eine Beton-Fördereinrichtung 60 gezeigt, die als Beton-Direktfördereinrichtung ausgebildet ist.

Die Beton- Fördereinrichtung 60 kann bevorzugt als eine Betonpumpe, insbesondere in Form einer Pleuelpumpe ausgebildet sein. Weiterhin kann die Beton- Fördereinrichtung 60 dazu ausgebildet sein, Messdaten K über den geförderten Beton 4 zu ermitteln und etwaige zu versenden. Solche Messdaten können beispielsweise das Volumen, die Masse und/oder die Dichte eines geförderten Betons umfassen und/oder die Fließfähigkeit eines geförderten Betons. Solche Messdaten K können insbesondere von der Beton-Rezepturdatenbank 90 empfangen und verarbeitet werden. Bei den Messdaten K kann es sich um Ist-Materialeigenschaftswerte des bereitgestellten Betons, insbesondere des Frischbetons handeln.

Die Beton- Fördereinrichtung 60 umfasst eine Betonaufnahme 61 und eine Betonabgabe 62. Die Betonaufnahme 61 ist bevorzugt mit der Beton-Anmischvorrichtung 40 verbunden. Die Betonabgabe 62 ist bevorzugt mit der Betoniervorrichtung 80 verbunden.

Die vorgenannten Verbindungen können etwaige temporär und/oder schaltbar, insbesondere maschinengesteuert schaltbar sein.

Gemäß einer bevorzugten Ausführung kann die Betonabgabe 62 zeitweise und abwechselnd mit mindestens zwei unterschiedlichen Betoniervorrichtungen 81 verbindbar sein. Alternativ oder zusätzlich kann die Betonaufnahme 61 zeitweise und insbesondere abwechselnd mit zwei unterschiedlichen Beton-Anmischvorrichtung oder mit zwei unterschiedlichen Betonbereitstellungen, insbesondere Vorlagevolumina 47 von einer oder von mehreren Beton-Anmischvorrichtungen 40 verbindbar sein. Das gesteuerte Ändern oder Umschalten der Verbindung kann beispielsweise durch Ventile oder steuerbare Fluidleitvorrichtungen erfolgen (nicht dargestellt).

Gemäß einer bevorzugten Ausführung kann die Beton- Fördereinrichtung 60 gemäß einem Anforderungskommando S1 und/oder gemäß einem Bereitstellungskommando S3 gesteuert werden, insbesondere gemäß einem momentanen Mengenbedarf Q.

Gemäß einer Ausführung kann die Beton- Fördereinrichtung 60 dazu ausgebildet sein, selbst ein Anforderungskommando S2 und/oder ein Bereitstellungskommando S4 zu erzeugen, insbesondere in Antwort auf ein empfangenes Anforderungskommando S1 oder ein empfangenes Bereitstellungskommando S4. Alternativ oder zusätzlich kann eine Beton-Fördereinrichtung 60 dazu ausgebildet sein, ein empfangenes Anforderungskommando S1 und/oder ein empfangenes Bereitstellungskommando S4 zu verändern. Eine solche Erzeugung eines eigenen Kommandos oder eine Änderung eines empfangenen Kommandos kann insbesondere ausgeführt werden, wenn die ermittelten Messdaten K zu einem geförderten Beton 4, weiter insbesondere die Fließfähigkeit und/oder das Volumen, die Masse und/oder die Dichte des Betons, von einer Soll-Materialeigenschaft abweichen, die gemäß einem der empfangenen Kommandos und/oder gemäß einer dem hergestellten Beton zugeordneten Rezeptur R definiert ist. Durch die Erzeugung oder Änderung eines Kommandos kann in einem Zusammenwirken von Beton- Fördereinrichtung 60 und Beton-Anmischvorrichtung 40 sichergestellt werden, dass die Ist-Materialeigenschaftswerte des geförderten Betons den Soll-Materialeigenschaftswerten angeglichen werden. Andererseits kann eine Betoniervorrichtung 80 davon Kenntnis erlangen, wenn etwaige die Ist-Materialeigenschaftswerte des zugeförderten Betons eine Abweichung gegenüber den Soll-Materialeigenschaftswerten gemäß eines zuvor ausgegebenen Anforderungskommando S1 aufweisen. Gegebenenfalls können an der oder durch die Betoniervorrichtung 80 geeignete Kompensationsmaßnahmen ergriffen werden.

An der oder durch die Beton-Anmischvorrichtung kann die Bereitstellung von Recycling-Zuschlagstoff 11' gemäß dem empfangenen Anforderungskommando S1, F2 gesteuert werden. Dabei kann insbesondere eine Änderung berücksichtigt werden, die durch die vorgenannte Tätigkeit der Beton- Fördereinrichtung 60 verursacht ist.

Die Beton-Anmischvorrichtung ist bevorzugt dazu ausgebildet, ein Materialzuführkommando S5 auszugeben. Das Materialzuführkommando S5 kann insbesondere basierend auf einer momentanen Versorgungssituation an einer Zuschlagstoff-Zuführung 41, weiter insbesondere auf Basis eines Füllstands in einem Volumenspeicher ausgegeben werden.

Das Materialzuführkommando S5 kann bevorzugt an einer Brechvorrichtung 70 empfangen werden. Die Brechvorrichtung 70 ist bevorzugt dazu ausgebildet, in Antwort auf das Materialzuführungskommando S5 einen Recycling-Zuschlagstoff 11', insbesondere ein zerkleinertes Bauwerk-Abbruchmaterial bereitzustellen.

Der Recycling-Zuschlagstoff 11' wird bevorzugt durch eine Material-Fördereinrichtung 75, insbesondere eine Material-Direktfördereinrichtung, gefördert. Die Material- Fördereinrichtung 75 weist bevorzugt eine Materialaufnahme 76 und eine Materialabgabe 77 auf. Die Materialabgabe 77 ist bevorzugt mit der Zuschlagstoff-Zuführung 41 der Beton-Anmischvorrichtung 40 verbunden. Die Materialaufnahme 76 ist bevorzugt mit der Brechvorrichtung 70 verbunden.

Die Brechvorrichtung 70 und/oder die Material- Fördereinrichtung 75 werden bevorzugt gemäß dem Materialzuführkommando S5 gesteuert. Weiterhin wird bevorzugt der Brechvorrichtung 70 in Antwort auf ein Materialzuführkommando S5 ein Abbruchmaterial 22 zugeführt, insbesondere ein Abbruchmaterial, das für die Herstellung einer bestimmten Recycling-Zuschlagstoffart nutzbar oder erforderlich ist. Das Materialzuführkommando S5 kann eine Menge und/oder eine Mischung und/oder einen Kantstück-Mindestanteil und/oder einen Rundstück-Höchstanteil und/oder eine Fraktionsgröße und/oder eine Fraktionsverteilung als einen Soll-Wert definieren.

Die Brechvorrichtung 70 ist bevorzugt dazu ausgebildet ein Materialverfügbarkeitskommando S6 auszugeben. Das MaterialVerfügbarkeitskommando kann bevorzugt für zumindest einen der vorgenannten Parameter einen zugehörigen Ist-Wert umfassen. Der Ist-Wert kann auf beliebige Weise ermittelt sein. Bevorzugt kann die Brechvorrichtung 70 eine Analyseapparatur zur Bestimmung mindestens eines Materialparameters des zerkleinerten Bauwerk-Abbruchmaterials aufweisen oder mit einer solchen Analyseapparatur verbunden sein.

Bei der Betoniertechnik gemäß der vorliegenden Offenbarung wird also zunächst ausgehend von der Kavität 2 ein Anforderungskommando S1 für einen herzustellenden Beton 4 ausgegeben, das mindestens einen Soll-Materialeigenschaftswert umfasst. Auf Basis dieses Anforderungskommando S1 wird die Auswahl einer Rezeptur R getroffen und zwar insbesondere auf Basis des Soll-Materialeigenschaftswerts. Die Auswahlrezeptur R kann alternativ oder zusätzlich auf Basis einer an der Beton-Anmischvorrichtung 40 verfügbaren Recycling-Zusatzstoffart erfolgen. Wenn beispielsweise ein zerkleinertes Bauwerk-Abbruchmaterial verfügbar ist, das ausschließlich oder überwiegend aus Altbetonbruch 12 besteht, kann eine Rezeptur R ausgewählt werden, die geeignete Beigabemengen der weiteren Hauptbestandteile 5 definiert, sodass ein daraus hergestellter voll Recycling-Beton die definierten Soll-Materialeigenschaften erfüllt. Ist hingegen ein zerkleinertes Bauwerk-Abbruchmaterial verfügbar, das ausschließlich oder überwiegend aus Mauerwerkbruch 13 besteht, kann eine entsprechend andere Rezeptur R ausgewählt werden. Weiterhin können durch die Beton-Rezepturdatenbank neue Rezepturen R erzeugt werden, in denen beispielsweise zunächst nur geringe Beifügungsmengen eines weiteren neuen Bauwerk-Abbruchmaterials vorgesehen sind, beispielsweise aus Ziegelbruch. Während und nach der Durchführung der Betonherstellung und/oder Betonförderung und/oder Herstellung eines Betonkörpers können an vielfachen Stellen Messdaten K sowie Materialprüfdaten M erfasst werden, die bevorzugt der Beton-Rezepturdatenbank 90 zugeführt und der jeweiligen Rezeptur R zugeordnet werden. Aus diesem Ist-Werten können in einem iterativen oder kontinuierlichen Lernprozess genauere Kenntnisse über die Ist-Materialeigenschaften des Frischbetons sowie des abgebundenen Betons gesammelt und ausgewertet werden. Aus diesen Daten können dann wiederum Verfeinerungen oder Änderungen der bestehenden Rezepturen R vorgenommen werden. Andererseits können immer wieder neue Rezepturen R erzeugt werden. Dies erfolgt bevorzugt automatisch durch mindestens einen Algorithmus, insbesondere einen Künstliche-Intelligenz Algorithmus und/oder ein entsprechendes Programm-Modul der Beton-Rezepturdatenbank. Bereits während der Abbruchphase eines Bestandsbauwerks 21 können somit sehr schnell die Verwendungsmöglichkeiten des verfügbaren Abbruchmaterials 22 als Zuschlagstoff 11 für die Herstellung von Beton 4 geschätzt, getestet und ausgeweitet werden. Dabei werden in den Rezepturen bevorzugt zunächst konservative Soll-Materialeigenschaftswerte festgelegt, die gegebenenfalls um ein erhebliches Sicherheitsmaß unterhalb der Ist-Materialeigenschaftswerte angesetzt werden, die bei den ersten Testkörpern T ermittelt werden. Weiterhin werden die Rezepturen bevorzugt zunächst für die Beton-Verwendungsklasse "Bohrpfahlbeton" definiert. Infolge des Lernvorgangs werden basierend auf den zahlreichen empfangenen Daten, insbesondere Messdaten K und Materialprüfdaten M zu unterschiedlichen Zeitpunkten nach der Herstellung des Betons 4, die Soll-Materialeigenschaftswerte einer zugeordneten Rezeptur auf Basis belastbarer empirischer Werte angehoben. Wenn ein derart geänderter Soll-Materialeigenschaftswert, der für eine gespeicherte Rezeptur R auf Basis der empfangenen Daten geändert ist, einen vorbestimmten Verwendungsklassen-Zuordnungsgrenzwert erreicht oder überschreitet, kann eine Betonverwendungsklasse dieser Rezeptur geändert werden oder eine neue Rezeptur R mit der geänderten Beton-Verwendungsklasse erzeugt werden. Somit kann durch die Betoniertechnik gemäß der vorliegenden Offenbarung auch ein Einsatz von Beton, der zumindest anteilig Zuschlagstoffe auf Basis von Bauwerk-Abbruchmaterial umfasst, mit entsprechend validiertem Materialeigenschaftsnachweis für andere Verwendungszwecke mit deutlich strengeren Anforderungen vorgeschlagen, entwickelt, getestet und freigegeben werden.

Ausgangspunkt ist bevorzugt die Verwendung eines Recycling-Zuschlagstoffs 11', der aus zerkleinertem Bauwerk-Abbruchmaterial eines bestimmten Typs besteht oder diesen überwiegend umfasst. Besonders bevorzugt kann der Zuschlagstoff ausschließlich ein Recycling-Zuschlagstoff 11' sein und/oder ein Recycling-Zuschlagstoff 11' von genau einer vorbestimmten Recycling-Zuschlagstoffart sein. Nach und nach können dann andere Materialien als Ausgangspunkt gewählt und in Mischungen kombiniert werden.

Eine bevorzugte Ausführung sieht vor, dass ein Tiefbau-Betonkörper eins auf dem Baugelände 20 erzeugt wird, auf dem auch ein Bestandsbauwerk 21 abgebrochen wird. Das Abbruchmaterial 22 dieses Bestandsbauwerks 21 wird bevorzugt zerkleinert und zu einem Recycling-Zuschlagstoff 11' für den Beton 4 verarbeitet und für die Herstellung des Tiefbau-Betonkörpers 1 verwendet. Gemäß einer bevorzugten Ausführung wird der angeforderter Beton 4 spontan in Antwort auf ein Anforderungskommando S1 hergestellt. Der spontan bereitgestellte Beton wird dann bevorzugt durch kontinuierliche Förderung in die Kavität 2 eingebracht.

Der Bohrpfahlbeton 4' wird bevorzugt direkt von einer Beton-Anmischvorrichtung 40 bezogen, die den Beton 4 aus den Hauptbestandteilen 5 erzeugt, wobei die Beton-Anmischvorrichtung 40 insbesondere auf demselben Baugelände 20 angeordnet ist.

Hierdurch wird begünstigt oder sichergestellt, dass eine korrekte Zuordnung von Messdaten K und/oder Materialprüfdaten M des hergestellten Betons 4 sicher und insbesondere überwiegend oder vollständig maschinengesteuert einer bestimmten Rezeptur R zuordenbar sind, auf deren Basis die Herstellung des Betons 4 erfolgt ist. Weiterhin wird es ermöglicht, auch schnelle Änderungen der Menge und/oder der Materialeigenschaftswerte des Betons 4 vorzunehmen. In dem Beispiel der Figur 6 ist die momentane Füllung F der Kavität 2 infolge des Ablaufens eines Teils des Betons 4 in das Volumen der verborgenen Kavität 2' niedriger als erwartet. Das Erfassungsmittel 83 ist bevorzugt dazu ausgebildet, die Füllung F der Kavität 2 während der Einbringung des zugeführten Betons 4 zu erfassen und/oder zu überwachen. Es kann insbesondere ein Anforderungskommando S1, S2 auf Basis der erfassten Füllung F erzeugt oder geändert werden. Im Beispiel der Figur 5 war zunächst davon ausgegangen worden, dass ein momentaner Mengenbedarf Q für den Fußbereich durch Schätzung eines Volumens festgelegt wird. Ein Anforderungskommando S1 kann somit zunächst eine Soll-Chargenmenge Q1 definieren. Wenn oder sobald festgestellt wird, dass die Füllung F der Kavität 2 von einem Erwartungswert abweicht, kann der momentane Mengenbedarf Q alternativ durch einen Soll-Materiastrom Q* definiert werden.

Entsprechend kann das Anforderungskommando S1 geändert oder ein neues Anforderungskommando S1 ausgegeben werden.

Die Festlegung des Soll-Materialstroms Q* kann so lange angepasst werden, bis die erfasste oder überwachte Füllung F der Kavität 2 wieder einem Erwartungswert angenähert oder angepasst ist.

In dem Beispiel von Figur 6 kann beispielsweise, sobald der Fußbereich der Kavität 2 gefüllt ist, das Anforderungskommando S'1 geändert oder ein neues Anforderungskommando S'1 ausgegeben werden, das eine andere Soll-Materialeigenschaft definiert, beispielsweise eine höhere oder niedrigere Fließfähigkeit des Betons 4 oder eine höhere oder niedrigere Soll-Belastbarkeit des Betons 4. Eine solche Änderung der Fließfähigkeit und/oder eines Soll-Belastbarkeitsparameters kann bevorzugt genutzt werden, um Teilabschnitte eines Betonkörpers, insbesondere eines Tiefbau-Betonkörpers 1 weiter insbesondere eines Betonpfahls oder eines Betonwandungspfahls mit unterschiedlichen Eigenschaften auszubilden, die beispielsweise dem Vorliegen oder Nichtvorliegen einer Bewehrung und/oder den jeweils zu erwartenden Belastungszustand anpassbar sind. So ist es insbesondere möglich Tiefbau-Betonkörper mit individuell angepassten Eigenschaften herzustellen und/oder die Menge des für eine Bewehrung notwendigen Materials zu verringern. Beispielsweise kann ein Betonpfahl im Fußbereich, wo er etwaig im Grundwasser steht, eine höhere Resistenz gegen das Eindringen von Wasser erfordern als in den höheren Abschnitten. Andererseits kann in einem mittleren bis oberen Abschnitt eines Betonpfahls ein höherer Bedarf für das Einbringen einer Bewehrung bestehen als in einem oberen Abschnitt. Gemäß einer anderen bevorzugten Ausführung wird die Betonzusammensetzung innerhalb eines Betonkörpers konstant gehalten.

Eine Bewehrung kann auf beliebige Weise in die Kavität und damit in den dort erzeugten Betonkörper eingebracht werden. Eine erste bevorzugte Ausführung sieht vor, dass ein Bewehrungskörper, insbesondere ein Bewehrungskorb, vor dem Einbringen des Betons 4 in die Kavität 2 eingesetzt wird. Diese Einbringungsart ist besonders für Tiefbau-Betonkörper mit einer großen Eindringtiefe in das Erdreich vorteilhaft. Eine alternative Ausführung sieht vor, dass der Bewehrungskörper, insbesondere ein Bewehrungskorb nach dem Einbringen des Betons in die Kavität eingebracht wird. Der Bewehrungskorb kann insbesondere in den bereits eingefüllten Beton 2 eingetaucht werden. Die zweite Einbringungsart kann eine blasenfreie Ausbildung des Betonkörpers begünstigen und/oder der Bildung einer inhomogenen Zuschlagstoffverteilung entgegenwirken. Beide Einbringungsarten können miteinander kombiniert werden. Bspw. kann ein erster Bewehrungskorb in einem unteren Abschnitt der Kavität nach der zweiten Einbringungsart eingesetzt werden, wenn dieser Teilabschnitt bereits mit Beton gefüllt ist. Dies kann einem Einbrechen der Kavität entgegenwirken. Anschließend kann ein zweiter Bewehrungskorb in einem oberen Abschnitt der Kavität gemäß der ersten Einbringungsart eingesetzt werden, woraufhin weiterer Beton eingefüllt wird. Gemäß einer anderen bevorzugten Ausführung, wird für einen Einzelpfahl nur eine der Einbringungsarten genutzt.

Ein Tiefbau-Betonkörper gemäß der vorliegenden Offenbarung kann in mindestens zwei Teilabschnitten eine unterschiedliche Mischung der Hauptbestandteile 5 und insbesondere eine unterschiedliche Mischung oder einen unterschiedlichen Anteil von Recycling-Zuschlagstoffen 11' aufweisen.

Abwandlungen der Erfindung sind in verschiedener Weise möglich. Ausgehend von der offenbarten Herstellung eines Tiefbau-Betonkörpers 1 können eine andere Form der Zuförderung und/oder der Herstellung des Betons 4 vorgesehen sein.

Die Einbringung des Betons, insbesondere des Vollrecycling-Betons, in die Kavität 2 kann auf beliebige Weise erfolgen. Eine bevorzugte Ausführung sieht vor, dass der Beton durch eine Betonleitung innerhalb der Bohrvorrichtung und während einer Rückzugbewegung der Bohrvorrichtung eingebracht wird.

Diese Form der Einbringung kann eine besonders zügige Herstellung begünstigen und einem Einbrechen der Wandung der Kavität entgegenwirken. Alternativ kann die Einbringung des Betons mit einem Schüttrohr erfolgen.

### Bezugszeichen

- 1: Tiefbau-Betonkörper
- 2: Kavität
- 2': Verborgene Kavität im Erdreich
- 3: Erdreich
- 4: Beton
- 4': Bohrpfahlbeton
- 5: Hauptbestandteile
- 6: Angeforderter Beton
- 7 11: Bereitgestellter Beton Zuschlagstoffe
- 11': Recycling-Zuschlagstoffe
- 12: Altbetonbruch
- 13: Mauerwerkbruch
- 15: Bindemittel
- 16: Wasser
- 20: Baugelände
- 21: Bestandsbauwerk, insbesondere Bestandsgebäude
- 22: Abbruchmaterial
- 25: Anforderungs-Signalfluss / Pull-Signalfluss
- 26: Rückmelde-Signalfluss / Freigabe-Signalfluss
- 30: Ballungsraum / Raum mit hoher Bebauungs- und/oder Verkehrsdichte
- 31: Straßennetz
- 40: Beton-Anmischvorrichtung, mobil oder fahrbar
- 41: Zuschlagstoff-Zuführung, insbesondere Volumenspeicher
- 42: Bindemittel-Zuführung, insbesondere Volumenspeicher
- 43: Wasser-Zuführung
- 45: Dosiervorrichtung (maschinengesteuert)
- 47: Vorlagevolumen
- 50: Entfernter Ort / Raum mit niedriger Bebauungs- und/oder Verkehrsdichte
- 51: Recycling-Unternehmen
- 52: Transportfahrzeug
- 60: Beton-Fördereinrichtung / Beton-Direktfördereinrichtung / Betonpumpe
- 61: Betonaufnahme
- 62: Betonabgabe
- 63: Betonführungspassage, insbesondere flexibel / Rohr / Schlauch
- 70: Brechvorrichtung
- 75: Material-Fördereinrichtung / Material-Direktfördereinrichtung
- 76: Materialaufnahme
- 77: Materialabgabe
- 80: Betoniervorrichtung
- 81: Betonapplikator
- 82: Bohrvorrichtung / Bohrkrone / Doppelkopfbohrvorrichtung
- 90: Beton-Rezepturdatenbank
- 91: Geordnete Datenstruktur
- C: Maschinensteuerung / Datenverarbeitungseinrichtung
- F: Füllung
- K: Messdaten
- M: Materialprüfdaten
- Q: Momentaner Mengenbedarf
- Q1,Q2: Soll-Chargenmenge
- Q*: Soll-Materialstrom
- R: Rezeptur
- S1,S2: Anforderungskommando
- S3,S4: Bereitstellungskommando
- S5: Materialzuführungskommando
- S6: Materialverfügbarkeitskommando
- T: Testkörper
- W1: Direktverwertung von Abbruchmaterial
- W2: Abtransport von Abbruchmaterial

## Patentansprüche

1. Betonierverfahren zur Herstellung eines Tiefbau-Betonkörpers, (1) nämlich eines Betonpfahls (1) oder eines Betonwandungspfahls, wobei das Betonierverfahren die folgenden Schritte umfasst:
- Bereitstellen einer Kavität (2) im Erdreich (3) eines Baugeländes (20), wobei die Kavität (2) durch einen Bohrvorgang erzeugt ist oder wird;
- Bereitstellen von Beton (4), nämlich von Bohrpfahlbeton (4'), der aus den Hauptbestandteilen (5) Zuschlagstoffe (11), Bindemittel (15) und Wasser (16) gebildet ist;
- Einbringen des Betons (4) in die Kavität (2), sodass der hergestellte Betonkörper eine Außenkontur umfasst, die durch die Kavität (2) im Erdreich (3) definiert ist;
**dadurch gekennzeichnet, dass** der Beton (4) ein Vollrecycling-Beton ist und die Zuschlagstoffe (11) Recycling-Zuschlagstoffe (11') sind und
vollständig aus zerkleinertem Bauwerk-Abbruchmaterial bestehen, und
wobei
der Beton (4), als am Verarbeitungsort hergestellter Frischbeton erzeugt wird.

2. Betonierverfahren nach einem der vorhergehenden Ansprüche, wobei der Tiefbau-Betonkörper (1) auf einem Baugelände (20) erzeugt wird, auf dem ein Bestandsbauwerk (21) abgebrochen wurde oder wird, wobei das Abbruchmaterial (22) dieses Bestandsbauwerks (21) zerkleinert wird, zu einem Recycling-Zuschlagstoff (11') für den Beton (4) verarbeitet wird, und für die Herstellung des Tiefbau-Betonkörpers (1) verwendet wird.

3. Betonierverfahren nach einem der vorhergehenden Ansprüche, wobei der Bohrpfahlbeton (4')
- spontan und in Abhängigkeit von einem momentanen Mengenbedarf (Q) erzeugt wird; UND/ODER.
- in unterbrechungsfreier Direktzuförderung zu der Kavität (2) erzeugt wird; UND/ODER
- direkt von einer Beton-Anmischvorrichtung (40) bezogen wird, die den Beton (4) aus den Hauptbestandteilen (5) erzeugt, wobei die Beton-Anmischvorrichtung (40) insbesondere auf demselben Baugelände (20) angeordnet ist.

4. Betonierverfahren nach einem der vorhergehenden Ansprüche, wobei das Bereitstellen und insbesondere das Erzeugen der Recycling-Zuschlagstoffe (11'), insbesondere des zerkleinerten Bauwerk-Abbruchmaterials, spontan und in Abhängigkeit von einem momentanen Mengenbedarf (Q) ausgeführt wird, insbesondere auf demselben Baugelände (20).

5. Betonierverfahren nach einem der vorhergehenden Ansprüche, wobei der spontan bereitgestellte Beton (4,7) durch kontinuierliche Förderung in die Kavität (2) eingebracht wird.

6. Betonierverfahren nach einem der vorhergehenden Ansprüche, wobei die Beton-Anmischvorrichtung (40)
- mindestens eine Zuschlagstoff-Zuführung (41) umfasst, an der zerkleinertes Bauwerk-Abbruchmaterial bereitgestellt ist oder wird, wobei die Zuschlagstoff-Zuführung (41) insbesondere einen Volumenspeicher für einen Recycling-Zuschlagstoff (11') und/oder eine Dosiervorrichtung aufweist, die mindestens einen Recycling-Zuschlagstoff (11') dosiert; UND/ODER
- mindestens zwei Zuschlagstoff-Zuführungen (41) für Recycling-Zuschlagstoffe (11') von unterschiedlichen Recycling-Zuschlagstoffarten aufweist.

7. Betonierverfahren nach einem der vorhergehenden Ansprüche, wobei der Bohrpfahlbeton (4') maschinengesteuert auf Basis von Kommando-Signalen bereitgestellt und/oder erzeugt wird und das Betonierverfahren die folgenden Schritte umfasst:
- Nach dem Bereitstellen einer Kavität (2) im Erdreich (3): Ausgabe eines Anforderungskommandos (S1, S2) für einen angeforderten Beton (4, 6) in Bezug auf diese Kavität (2);
- Erzeugen des angeforderten Betons (4) durch die Beton-Anmischvorrichtung (40) gemäß dem Anforderungskommando (S1, S2);
- Ausgabe eines Bereitstellungskommandos (S3, S4) in Antwort auf das Anforderungskommando (S1, S2), wenn der Beton (4) bereitgestellt ist oder sobald der Beton (4) bereitgestellt wird;
- Einbringen des Betons (4) in die Kavität (2) in Antwort auf das Bereitstellungskommando (S3, S4).

8. Betonierverfahren nach dem vorhergehenden Anspruch, wobei
- das Anforderungskommando (S1, S2) und/oder das Bereitstellungskommando (S3, S4) einen momentanen Mengenbedarf (Q) an Beton (4) definiert, insbesondere eine Soll-Chargenmenge (Q1, Q2) und/oder einen Soll-Materialstrom (Q*) des Betons; UND/ODER wobei
- die Füllung (F) der Kavität (2) während der Einbringung des Betons (4) erfasst oder überwacht wird, und wobei ein momentaner Mengenbedarf (Q) in Abhängigkeit von der Kavität (2) oder der Füllung (F) der Kavität (2) festgelegt oder angepasst wird; UND/ODER wobei
- der Bohrpfahlbeton (4'), durch eine Beton-Fördereinrichtung (60), insbesondere durch eine Beton-Direktfördereinrichtung, mit einer Betonaufnahme (61) und einer Betonabgabe (62) gefördert wird, wobei insbesondere die Betonaufnahme (61) mit der Beton-Anmischvorrichtung (40) verbunden ist und die Betonabgabe (62) mit einer Betoniervorrichtung (80) verbunden ist.

9. Betonierverfahren nach einem der vorhergehenden Ansprüche, wobei die Beton-Fördereinrichtung (60), insbesondere die Beton-Direktfördereinrichtung, gemäß dem Anforderungskommando (S1, S2), und/oder gemäß dem Bereitstellungskommando (S3, S4) gesteuert wird insbesondere gemäß dem momentanen Mengenbedarf (Q).

10. Betonierverfahren nach einem der vorhergehenden Ansprüche, wobei
- die Bereitstellung von Recycling-Zuschlagstoff (11'), insbesondere von zerkleinertem Bauwerk-Abbruchmaterial, an der Zuschlagstoff-Zuführung (41) der Beton-Anmischvorrichtung (40) gemäß dem Anforderungskommando (S1, S2) gesteuert wird, wobei insbesondere ein Materialzuführkommando (S5) ausgegeben wird; UND/ODER wobei
- der Recycling-Zuschlagstoff (11'), nämlich das zerkleinerte Bauwerk-Abbruchmaterial, durch eine Brechvorrichtung (70) in Antwort auf ein Materialzuführkommando (S5) bereitgestellt wird; UND/ODER wobei
- der Recycling-Zuschlagstoff (11'), nämlich das zerkleinerte Bauwerk-Abbruchmaterial, durch eine steuerbare Brechvorrichtung (70) mit einer einstellbaren Fraktionsgröße und/oder Fraktionsverteilung hergestellt wird, insbesondere mit der angeforderten Fraktionsgröße und/oder Fraktionsverteilung.

11. Betonierverfahren nach einem der vorhergehenden Ansprüche, wobei mindestens ein Bewehrungskorb in die Kavität (2) eingebracht wird, wobei insbesondere
- ein Bewehrungskorb vor dem Einbringen des Betons (4) in die Kavität (2) eingesetzt wird; UND/ODER
- ein Bewehrungskorb nach dem Einbringen des Betons (4) in die Kavität (2) eingebracht und weiter insbesondere in den eingefüllten Beton (2) getaucht wird.

12. Betonierverfahren nach einem der vorhergehenden Ansprüche, wobei die Einbringung des Betons (4)
- mit einem Schüttrohr erfolgt; ODER
- durch eine Betonleitung innerhalb der Bohrvorrichtung und während einer Rückzugbewegung der Bohrvorrichtung erfolgt.

13. Betonierverfahren nach einem der vorhergehenden Ansprüche, wobei das Bindemittel (15) ein klinkerreduzierter Zement ist, der insbesondere Hüttensand und/oder Kalksteinmehl als Klinkersubstitut enthält.

14. Betonierverfahren nach einem der vorhergehenden Ansprüche, wobei der Recycling-Zuschlagstoff (11'), nämlich das zerkleinerte Bauwerk-Abbruchmaterial, durch eine Material-Fördereinrichtung (75), insbesondere eine Material-Direktfördereinrichtung, mit einer Materialaufnahme (76) und einer Materialabgabe (77) gefördert wird, wobei insbesondere die Materialabgabe (77) mit der Zuschlagstoff-Zuführung (41) der Beton-Anmischvorrichtung (40) verbunden ist UND/ODER die Materialaufnahme (76) mit der Brechvorrichtung (70) verbunden ist.

15. Betonierverfahren nach einem der vorhergehenden Ansprüche, wobei die Brechvorrichtung (70) und/oder die Material-Fördereinrichtung (75) gemäß dem Materialzuführkommando (S5) gesteuert wird, wobei insbesondere der Brechvorrichtung (70) in Antwort auf das Materialzuführkommando (S5) ein Abbruchmaterial (22) zugeführt wird.

## Claims

1. Concreting method for producing an underground construction concrete structure (1), namely a concrete pile (1) or a concrete wall pile, wherein the concreting method comprises the following steps:
- Providing a cavity (2) in the soil (3) of a construction site (20), wherein the cavity (2) has been or is created by a drilling process;
- Providing concrete (4), namely bored-pile concrete (4'), which is formed from the main constituents (5) aggregate materials (11), binder (15) and water (16);
- Introducing the concrete (4) into the cavity (2), so that the produced concrete body comprises an outer contour which is defined by the cavity (2) in the soil (3);
**characterised in that** the concrete (4) is fully recycled concrete and the aggregate materials (11) are recycled aggregate materials (11') and consist entirely of crushed demolition material from a building, and
wherein
the concrete (4) is produced as fresh concrete manufactured on site.

2. Concreting method according to one of the preceding claims, wherein the underground construction concrete structure (1) is produced on a construction site (20) on which an existing building (21) has been or is being demolished, wherein the demolition material (22) of this existing building (21) is crushed and processed into a recycled aggregate material (11') for the concrete (4), and used for producing the underground construction concrete structure (1).

3. Concreting method according to one of the preceding claims, wherein the bored-pile concrete (4')
- is produced spontaneously and in accordance with a current quantity requirement (Q); AND/OR
- is produced in an uninterrupted direct feed to the cavity (2); AND/OR
- is obtained directly from a concrete mixing device (40) which produces the concrete (4) from the main constituents (5), wherein the concrete mixing device (40) is, in particular, located on the same construction site (20).

4. Concreting method according to one of the preceding claims, wherein the provision and, in particular, the production of the recycled aggregate materials (11'), in particular of the crushed demolition material from a building, is carried out spontaneously and in accordance with a current quantity requirement (Q), in particular on the same construction site (20).

5. Concreting method according to one of the preceding claims, wherein the concrete (4, 7) provided spontaneously is introduced into the cavity (2) by continuous conveyance.

6. Concreting method according to one of the preceding claims, wherein the concrete mixing device (40)
- comprises at least one aggregate-material feed (41), at which crushed demolition material from a building has been or is provided, wherein the aggregate-material feed (41) has, in particular, a volume store for a recycled aggregate material (11') and/or a dosing device which doses at least one recycled aggregate material (11'); AND/OR
- comprises at least two aggregate-material feeds (41) for recycled aggregate materials (11') of different recycled aggregate material types.

7. Concreting method according to one of the preceding claims, wherein the bored-pile concrete (4') is provided and/or produced in a machine-controlled manner on the basis of command signals, and the concreting method comprises the following steps:
- After providing a cavity (2) in the soil (3): Issuing a request command (S1, S2) for requested concrete (4, 6) in relation to this cavity (2);
- Producing the requested concrete (4) by means of the concrete mixing device (40) in accordance with the request command (S1, S2);
- Issuing a supply command (S3, S4) in response to the request command (S1, S2) when the concrete (4) has been provided or as soon as the concrete (4) is being provided;
- Introducing the concrete (4) into the cavity (2) in response to the supply command (S3, S4).

8. Concreting method according to the preceding claim, wherein
- the request command (S1, S2) and/or the supply command (S3, S4) defines a current quantity requirement (Q) of concrete (4), in particular a target batch quantity (Q1, Q2) and/or a target material flow (Q*) of the concrete; AND/OR wherein
- the filling (F) of the cavity (2) is detected or monitored during the introduction of the concrete (4), and wherein a current quantity requirement (Q) is determined or adjusted in dependence on the cavity (2) or the filling (F) of the cavity (2); AND/OR wherein
- the bored-pile concrete (4') is conveyed by a concrete conveying system (60), in particular by a direct concrete conveying system, comprising a concrete intake (61) and a concrete outlet (62), wherein, in particular, the concrete intake (61) is connected to the concrete mixing device (40) and the concrete outlet (62) is connected to a concreting device (80).

9. Concreting method according to one of the preceding claims, wherein the concrete conveying system (60), in particular the direct concrete conveying system, is controlled in accordance with the request command (S1, S2) and/or in accordance with the supply command (S3, S4), in particular in accordance with the current quantity requirement (Q).

10. Concreting method according to one of the preceding claims, wherein
- the provision of recycled aggregate material (11'), in particular crushed demolition material from a building, to the aggregate-material feed (41) of the concrete mixing device (40) is controlled in accordance with the request command (S1, S2), wherein, in particular, a material feed command (S5) is issued; AND/OR wherein
- the recycled aggregate material (11'), namely the crushed demolition material from a building, is provided by a crushing device (70) in response to a material feed command (S5); AND/OR wherein
- the recycled aggregate material (11'), namely the crushed demolition material from a building, is produced by a controllable crushing device (70) with an adjustable fraction size and/or fraction distribution, in particular with the requested fraction size and/or fraction distribution.

11. Concreting method according to one of the preceding claims, wherein at least one reinforcement cage is introduced into the cavity (2), in particular
- a reinforcement cage is inserted into the cavity (2) before the concrete (4) is introduced into the cavity (2); AND/OR
- a reinforcement cage is introduced into the cavity (2) after the concrete (4) has been introduced into the cavity (2) and, further in particular, is immersed into the filled-in concrete (2).

12. Concreting method according to one of the preceding claims, wherein the concrete (4) is introduced
- using a conductor pipe; OR
- through a concrete line within the drilling device and whilst the drilling device is being withdrawn.

13. Concreting method according to one of the preceding claims, wherein the binder (15) is a clinker-reduced cement which contains, in particular, ground granulated blast-furnace slag and/or limestone powder as a clinker substitute.

14. Concreting method according to one of the preceding claims, wherein the recycled aggregate material (11'), namely the crushed demolition material from a building, is conveyed by a material conveying device (75), in particular a direct material conveying device, comprising a material intake (76) and a material discharge (77), wherein, in particular, the material discharge (77) is connected to the aggregate-material feed (41) of the concrete mixing device (40) AND/OR the material intake (76) is connected to the crushing device (70).

15. Concreting method according to one of the preceding claims, wherein the crushing device (70) and/or the material conveying device (75) is controlled in accordance with the material feed command (S5), wherein, in particular, demolition material (22) is fed to the crushing device (70) in response to the material feed command (S5).

## Revendications

1. Procédé de bétonnage pour la fabrication d'un corps en béton de génie civil (1), à savoir d'un pieu en béton (1) ou d'un pieu de paroi en béton, le procédé de bétonnage comprenant les étapes suivantes :
- la fourniture d'une cavité (2) dans le sol (3) d'un terrain de construction (20), la cavité (2) étant produite ou étant en cours de production par une opération de forage ;
- la fourniture de béton (4), à savoir de béton pour pieux forés (4'), qui est constitué des principaux composants (5) granulats (11), liant (15) et eau (16) ;
- l'introduction du béton (4) dans la cavité (2), de sorte que le corps en béton fabriqué comprend un contour extérieur qui est défini par la cavité (2) dans le sol (3) ;
**caractérisé en ce que** le béton (4) est un béton entièrement recyclé et les granulats (11) sont des granulats recyclés (11') et sont intégralement constitués de matériau de démolition d'ouvrage broyé, et
le béton (4) étant produit, en tant que béton frais fabriqué sur le lieu de mise en œuvre.

2. Procédé de bétonnage selon l'une des revendications précédentes, le corps en béton de génie civil (1) étant fabriqué sur un terrain de construction (20) sur lequel un ouvrage existant (21) a été ou est démoli, le matériau de démolition (22) de cet ouvrage existant (21) étant broyé, transformé en un granulat recyclé (11') pour le béton (4), et utilisé pour la fabrication du corps en béton de génie civil (1).

3. Procédé de bétonnage selon l'une des revendications précédentes, le béton pour pieux forés (4') étant
- produit spontanément et en fonction d'un besoin quantitatif (Q) momentané ; ET/OU
- produit en amenée directe ininterrompue vers la cavité (2) ; ET/OU
- obtenu directement à partir d'un dispositif de préparation de béton (40), qui produit le béton (4) à partir des principaux composants (5), le dispositif de préparation de béton (40) étant notamment disposé sur le même terrain de construction (20).

4. Procédé de bétonnage selon l'une des revendications précédentes, la fourniture et notamment la production des granulats recyclés (11'), notamment du matériau de démolition d'ouvrage broyé, étant réalisées spontanément et en fonction d'un besoin quantitatif (Q) momentané, notamment sur le même terrain de construction (20).

5. Procédé de bétonnage selon l'une des revendications précédentes, le béton (4, 7) fourni spontanément étant introduit dans la cavité (2) par acheminement continu.

6. Procédé de bétonnage selon l'une des revendications précédentes, le dispositif de préparation de béton (40)
- comprenant au moins une alimentation en granulats (41), au niveau de laquelle du matériau de démolition d'ouvrage broyé est fourni ou est en cours de fourniture, l'alimentation en granulats (41) présentant notamment un réservoir volumétrique pour un granulat recyclé (11') et/ou un dispositif de dosage qui dose au moins un granulat recyclé (11') ; ET/OU
- comprenant au moins deux alimentations en granulats (41) destinées à des granulats recyclés (11') de types de granulats recyclés différents.

7. Procédé de bétonnage selon l'une des revendications précédentes, le béton pour pieux forés (4') étant fourni et/ou produit par commande machine sur la base de signaux de commande, et le procédé de bétonnage comprenant les étapes suivantes :
- après la fourniture d'une cavité (2) dans le sol (3) : l'émission d'une commande de demande (S1, S2) pour un béton demandé (4, 6) en rapport avec cette cavité (2) ;
- la production du béton demandé (4) par le dispositif de préparation de béton (40) conformément à la commande de demande (S1, S2) ;
- l'émission d'une commande de fourniture (S3, S4) en réponse à la commande de demande (S1, S2), lorsque le béton (4) est fourni ou dès que le béton (4) est fourni ;
- l'introduction du béton (4) dans la cavité (2) en réponse à la commande de fourniture (S3, S4).

8. Procédé de bétonnage selon la revendication précédente,
- la commande de demande (S1, S2) et/ou la commande de fourniture (S3, S4) définissant un besoin quantitatif (Q) momentané en béton (4), notamment une quantité de lot de consigne (Q1, Q2) et/ou un débit de matériau de consigne (Q*) du béton ; ET/OU
- le remplissage (F) de la cavité (2) étant détecté ou surveillé pendant l'introduction du béton (4), et un besoin quantitatif (Q) momentané étant défini ou adapté en fonction de la cavité (2) ou du remplissage (F) de la cavité (2) ; ET/OU
- le béton pour pieux forés (4') étant acheminé par un dispositif d'acheminement de béton (60), notamment par un dispositif d'acheminement direct de béton, comprenant une réception de béton (61) et une sortie de béton (62), la réception de béton (61) étant notamment reliée au dispositif de préparation de béton (40) et la sortie de béton (62) étant reliée à un dispositif de bétonnage (80).

9. Procédé de bétonnage selon l'une des revendications précédentes, le dispositif d'acheminement de béton (60), notamment le dispositif d'acheminement direct de béton, étant commandé conformément à la commande de demande (S1, S2) et/ou conformément à la commande de fourniture (S3, S4), notamment conformément au besoin quantitatif (Q) momentané.

10. Procédé de bétonnage selon l'une des revendications précédentes,
- la fourniture de granulat recyclé (11'), notamment de matériau de démolition d'ouvrage broyé, au niveau de l'alimentation en granulats (41) du dispositif de préparation de béton (40) étant commandée conformément à la commande de demande (S1, S2), une commande d'alimentation en matériau (S5) étant notamment émise ; ET/OU
- le granulat recyclé (11'), à savoir le matériau de démolition d'ouvrage broyé, étant fourni par un dispositif de concassage (70) en réponse à une commande d'alimentation en matériau (S5) ; ET/OU
- le granulat recyclé (11'), à savoir le matériau de démolition d'ouvrage broyé, étant produit par un dispositif de concassage commandable (70) présentant une taille de fraction et/ou une répartition de fraction réglable, notamment avec la taille de fraction et/ou la répartition de fraction demandée.

11. Procédé de bétonnage selon l'une des revendications précédentes, au moins une cage d'armature étant introduite dans la cavité (2), notamment
- une cage d'armature étant mise en place dans la cavité (2) avant l'introduction du béton (4) ; ET/OU
- une cage d'armature étant introduite dans la cavité (2) après l'introduction du béton (4) et étant en outre notamment plongée dans le béton rempli (2).

12. Procédé de bétonnage selon l'une des revendications précédentes, l'introduction du béton (4)
- étant effectuée au moyen d'un tube de déversement ; OU
- étant effectuée par une conduite de béton située à l'intérieur du dispositif de forage et pendant un mouvement de retrait du dispositif de forage.

13. Procédé de bétonnage selon l'une des revendications précédentes, le liant (15) étant un ciment à teneur réduite en clinker contenant notamment du laitier granulé de haut fourneau et/ou de la farine de calcaire en tant que substitut de clinker.

14. Procédé de bétonnage selon l'une des revendications précédentes, le granulat recyclé (11'), à savoir le matériau de démolition d'ouvrage broyé, étant acheminé par un dispositif d'acheminement de matériau (75), notamment un dispositif d'acheminement direct de matériau, comprenant une réception de matériau (76) et une sortie de matériau (77), la sortie de matériau (77) étant notamment reliée à l'alimentation en granulats (41) du dispositif de préparation de béton (40) ET/OU la réception de matériau (76) étant reliée au dispositif de concassage (70).

15. Procédé de bétonnage selon l'une des revendications précédentes, le dispositif de concassage (70) et/ou le dispositif d'acheminement de matériau (75) étant commandé conformément à la commande d'alimentation en matériau (S5), un matériau de démolition (22) étant notamment acheminé vers le dispositif de concassage (70) en réponse à la commande d'alimentation en matériau (S5).
